Europäisches Patentamt

European Patent Office

Office européen des brevets

(19)

(11) **EP 0 747 204 A2**

(12) **EUROPEAN PATENT APPLICATION**

(43) Date of publication:
**11.12.1996 Bulletin 1996/50**

(51) Int Cl.⁶: **B29C 70/52**

(21) Application number: **96304251.0**

(22) Date of filing: **07.06.1996**

(84) Designated Contracting States:
**GB IT**

(30) Priority: **07.06.1995 US 474755**

(71) Applicants:
• **Kusibab, Zbigniew**
  **Chicago, Illinois 60634 (US)**
• **Werner, Robert I.**
  **Northbrook, Illinois 60062 (US)**
• **Kufner, John L.**
  **Chicago, Illinois 60614 (US)**
• **Nosich, Gregory**
  **Chicago, Illinois 60634 (US)**
• **Gauchel, James V.**
  **Newark, Ohio 43055 (US)**
• **Beckman, Jay J.**
  **Newark, Ohio 43055 (US)**
• **Lehman, Richard N.**
  **Newark, Ohio 43055 (US)**

(72) Inventors:
• **Kusibab, Zbigniew**
  **Chicago, Illinois 60634 (US)**
• **Werner, Robert I.**
  **Northbrook, Illinois 60062 (US)**
• **Kufner, John L.**
  **Chicago, Illinois 60614 (US)**
• **Nosich, Gregory**
  **Chicago, Illinois 60634 (US)**
• **Gauchel, James V.**
  **Newark, Ohio 43055 (US)**
• **Beckman, Jay J.**
  **Newark, Ohio 43055 (US)**
• **Lehman, Richard N.**
  **Newark, Ohio 43055 (US)**

(74) Representative: **Jones, Michael Raymond**
**HASELTINE LAKE & CO.**
**Hazlitt House**
**28 Southampton Buildings**
**Chancery Lane**
**London WC2A 1AT (GB)**

(54) **A method and system for producing pultruded parts**

(57) The present invention pertains to a system for producing a pultruded part (12) having a cross-sectional shape with a non-linear portion. The system (10) comprises a mechanism (14) for pultruding reinforcement, such as rovings (16), mat, veil, and mineral or glass fibers, but not limited thereto. The system comprises a mechanism for injecting resin mixture (20) into reinforcement. The injecting mechanism (18) comprises a chamber (22) through which the reinforcement is pulled by the pultrusion mechanism (14). The chamber (22) has an entrance opening (21) in communication with the chamber through which reinforcement enters the chamber and an exit opening (26) in communication with the chamber through which reinforcement exits the chamber, the entrance opening having a shape with a non-linear portion (17) that conforms with the reinforcement cross section. The chamber has a tapered portion (28) with a taper less than or equal to 1.5° which accents the impregnation of reinforcement with resin mixture and increases resin mixture pressure as the tapered portion narrows. The tapered portion is wider near the entrance opening than the exit opening. The injection mechanism (18) comprises a resin mixture distribution network (30) in communication with the chamber (22) through which resin mixture (20) is introduced into the chamber. The injection mechanism is disposed adjacent to and in engagement with the pultruding mechanism (14) so the pultrusion mechanism can pull the reinforcement through the chamber. Additionally, the system comprises a mechanism (42) for providing reinforcement formed into a desired cross section having a shape with a non-linear portion to the chamber through the entrance opening. The providing mechanism (32) is disposed adjacent to and in engagement with the injection mechanism (18) so reinforcement from the providing mechanism can enter the entrance opening of the injection mechanism. The system comprises a mechanism (44) for making the resin mixture (20) that has been combined with reinforcement (16) in the injection mechanism (18) into a ladder part (12). The making mechanism (34) is disposed adjacent to and in engagement with the injecting mechanism (18) to receive reinforcement with resin mixture from the injecting mechanism and disposed adjacent to and in engagement with the pultruding mechanism (14) so the reinforcement can be pulled through the making mechanism (34) by the pultruding mechanism. The present invention pertains to a system for producing a pultruded part having structural integrity. The present invention pertains to the injecting mechanism. The present invention pertains to a first carding plate (42). The first carding plate for controlling placement of reinforcement for resin mixture injection comprises a plate having a series of holes (44) which do not overlap and carding slots (116) through which rovings and mat, respectively, extend. The pre-wet as-

sembly (50) preferably comprises a pre-wet housing (98) having a pre-wet chamber (99) into which resin mixture is introduced. The pre-wet housing also has a slot (100) through which reinforcement passes. The slot is connected to the pre-wet chamber so resin mixture in the pre-wet chamber can contact reinforcement in the slot. The slot has a slot entrance (102) and a slot exit (104) through which the reinforcement enters and exits the slot, respectively. The present invention pertains to a method for producing pultruded parts.

FIG. 1a

## Description

### FIELD OF THE INVENTION

The present invention is related to a resin mixture injection system for the production of pultruded parts. More specifically, the present invention is related to a resin mixture injection system having a first carding plate, forming/ tension mechanism, pre-wet assembly and injecting mechanism connected with a pultrusion die to produce pultruded products.

### BACKGROUND OF THE INVENTION

The use of resin mixture injection as a means for impregnating reinforcements in the pultrusion process has been utilized in some form or another for many years. The process consists typically of replacing the resin mixture bath and wet preform stations with a machined cavity either attached or adjacent to the curing die. As dry fiber is fed into this cavity, resin is injected such that the reinforcement is fully wet through. As the wet fiber exits the injection system the fiber/resin combination is consolidated such that the proper glass resin ratio and part thickness is obtained and air is removed.

The key to resin injection is supplying sufficient resin to all points of a reinforcement pack. Ideally the pack consists of multilayers of mat and roving equivalent to that used in the standard bath process. Line speeds should be such that the pack can be converted to laminate at the same rate as the standard process. Surface appearance and mechanical performance of laminates processed by injection should also be identical or superior to those obtained using the standard impregnation system.

Past methods of using injection die processing have had limited success in meeting the above criteria. Some systems require special reinforcements designed to aid permeability through the reinforcement pack. Other systems have yielded laminates with lower mechanical performance. This has been blamed on the short impregnation time associated with the injection die process and the inability of the reinforcement coupling systems to bond to the resin in this time frame. Many attempts were unable to utilize mat and roving combinations especially when there was a center mat such as in the standard stacking sequence for ANSI 14.5 Type I ladder rails.

The obvious benefits of drastically reduced emissions, improved resin use efficiency and lower change over costs have kept research on the injection die process active in spite of the historical difficulties with the process. Many manufacturers attempted to achieve a partial benefit of the injection process by separating the injection system from the curing die by a short distance. The injection system effectively became a closed impregnation bath which reduced emissions and helped improve resin utilization. The curing die remained identical to that used in the standard process and the gap allowed wet out to occur over longer times thus bringing the mechanical performance closer to that of laminates manufactured from standard process methods. The injection process still had difficulty impregnating standard reinforcements such as the direct rovings which are common to pultrusion.

In order to maximize the effectiveness of the injection die system, a change from the traditional approaches to the injection die process was needed. The approach selected was based on the need to balance the permeation rate of the resin system through the thickness of the reinforcement pack with the rate parallel to the reinforcements. The objective was to cause resin to flow through the reinforcement pack so that sufficient resin could be supplied to the center of the reinforcement pack so that thicker parts and higher line speeds were feasible.

In addition, resin materials typically comprise blends of organic compounds, a significant portion of which are volatile organic compounds or VOC's. The emission of VOC's is strictly monitored and limited by various governmental agencies and regulations such that compliance can be quite expensive. Resin baths, as employed in the prior art impregnation processes, are open or partially open to the atmosphere and involve the use of large quantities of resin materials. Thus, the level of VOC emission is much higher than desired. The present invention provides for a means of controlling VOC evolution from the resin mixture when the resin mixture is in contact with air, limiting the emissions of VOC's while attaining desired surface appearance, color and physical properties of pultruded product.

### SUMMARY OF THE INVENTION

The present invention pertains to a system for producing a pultruded part having a cross-sectional shape with a non-linear portion. The system comprises a mechanism for pultruding reinforcement, such as rovings, mat, veil, and mineral or glass fibers, but not limited thereto. The system comprises a mechanism for injecting resin mixture into reinforcement. The injecting mechanism comprises a chamber through which the reinforcement is pulled by the pultrusion mechanism. The chamber has an entrance opening in communication with the chamber through which reinforcement enters the chamber and an exit opening in communication with the chamber through which reinforcement exits the chamber, the entrance opening having a shape with a non-linear portion that conforms with the reinforcement cross section. The chamber has a tapered portion with a taper less than or equal to 1.5° which accents the impregnation of reinforcement with resin mixture and increases resin mixture pressure as the tapered portion narrows. The tapered portion is wider near the entrance opening than the exit opening. The injection mechanism comprises a resin mixture distribution network in communication with the chamber through which resin mixture is introduced into the chamber. The injection mechanism is disposed adjacent to and in engagement with the pultruding mechanism so the pultrusion mechanism can pull the reinforcement through the chamber. Additionally, the system comprises a mechanism for providing reinforcement formed into a desired cross section having a shape with a non-linear portion to the chamber through the entrance opening. The providing mechanism is disposed adjacent to and in engagement with the injection mechanism so reinforcement from the providing mechanism can enter the entrance opening of the injection mechanism. The system comprises a mechanism for making the resin mixture that has been combined with reinforcement in the injection mechanism into a ladder part. The making mechanism is disposed adjacent to and in engagement with the injecting mechanism to receive reinforcement with resin mixture from the injecting mechanism and disposed adjacent to and in engagement with the pultruding mechanism so the reinforcement can be pulled through the making mechanism by the pultruding mechanism.

The present invention pertains to a system for producing a pultruded part having structural integrity.

The present invention pertains to the injecting mechanism.

The present invention pertains to a first carding plate. The first carding plate for controlling placement of reinforcement for resin mixture injection comprises a plate having a series of holes which do not overlap and carding slots through which rovings and mat, respectively, extend.

The present invention pertains to a pre-wet assembly. The pre-wet assembly preferably comprises a pre-wet housing having a pre-wet chamber into which resin mixture is introduced. The pre-wet housing also has a slot through which reinforcement passes. The slot is connected to the pre-wet chamber so resin mixture in the pre-wet chamber can contact reinforcement in the slot. The slot has a slot entrance and a slot exit through which the reinforcement enters and exits the slot, respectively.

The present invention also pertains to a housing, such as a second housing through which reinforcement for pultruded products pass. The housing comprises a mechanism for injecting resin mixture into reinforcement. The injecting mechanism comprises a chamber through which the reinforcement passes. The chamber has an entrance opening in communication with the chamber through which reinforcement enters the chamber and an exit opening in communication with the chamber through which reinforcement exits the chamber. The injecting mechanism comprises a resin mixture distribution network in communication with the chamber through which resin mixture is introduced into the chamber. The housing also comprises a pultrusion die which cures resin mixture with the reinforcement from the injecting mechanism. The pultrusion die is integrally connected and forming one continuous piece with the injecting mechanism to receive reinforcement with resin mixture from the injecting mechanism.

: The present invention pertains to an injecting mechanism for injecting resin mixture into reinforcement. The injecting mechanism comprises a top. There is a first side connected to the top. There is a bottom connected to the first side. There is a front connected to the first side, the top and the bottom. There is a back connected to the first side, the top and the bottom. The injecting mechanism also comprises a resin mixture distribution network in communication with the chamber through which resin mixture is injected into the chamber. The resin mixture distribution network has a first channel through which resin mixture is injected into the chamber at the first side and a second injection channel through which resin is injected at the top. The injecting mechanism comprises a chamber having a tapered portion with a taper of less than 1.5 degrees that accents impregnation of reinforcement with resin mixture and increases resin mixture pressure as the tapered portion narrows. The chamber is defined by the top, first side, bottom, front and back. The injecting mechanism comprises an entrance opening in communication with the chamber through which reinforcement enters the chamber. The entrance opening is disposed in the front. Additionally, there is an exit opening through which reinforcement exits the chamber. The tapered portion is wider nearer the entrance opening than the exit opening. The exit opening is disposed in the back.

The present invention pertains to a method for producing pultruded parts, such as ladder parts.

BRIEF DESCRIPTION OF THE DRAWINGS

In the accompanying drawings, the preferred embodiment of the invention and preferred methods of practicing the invention are illustrated in which:

Figure la is a schematic representation of a portion of a system for producing pultruded ladder parts.

Figure 1b is a schematic representation of a portion of the system for producing pultruded ladder parts.

Figure 2 is a cross-sectional schematic representation of an injecting mechanism of the present invention.

Figure 3 is a schematic representation of a core of the injecting mechanism.

Figure 4 is a schematic representation of a cavity of the injecting mechanism.

Figure 5 is a schematic representation of a cross-section of the injecting mechanism.

Figure 6 is a schematic representation of a first carding plate.

Figure 7 is a schematic representation of the first carding plate providing rovings and mat to a pre-wet assembly and forming/tension mechanism.

Figure 8 is a schematic representation of a cross-section of the pre-wet assembly.

Figure 9 is a schematic representation of a second housing with cooling blocks and heating/cooling blocks.

Figure 10 is a schematic representation of a cross-section of 10A-A of figure 9.

Figure 11 is a schematic representation of an overhead cross-sectional view of the injecting mechanism with a sandwich and resin mixture.

Figure 12 is a schematic representation of an overhead view of the second housing.

Figure 13a is a schematic representation of the cavity of the injecting mechanism of the second housing.

Figure 13b is a schematic representation of Section 13b of figure 13a.

Figure 13c is a schematic representation of Section 13c of figure 13a.

Figure 13d is a schematic representation of Section 13d of figure 13a.

Figure 13e is a schematic representation of Section 13e of figure 13a.

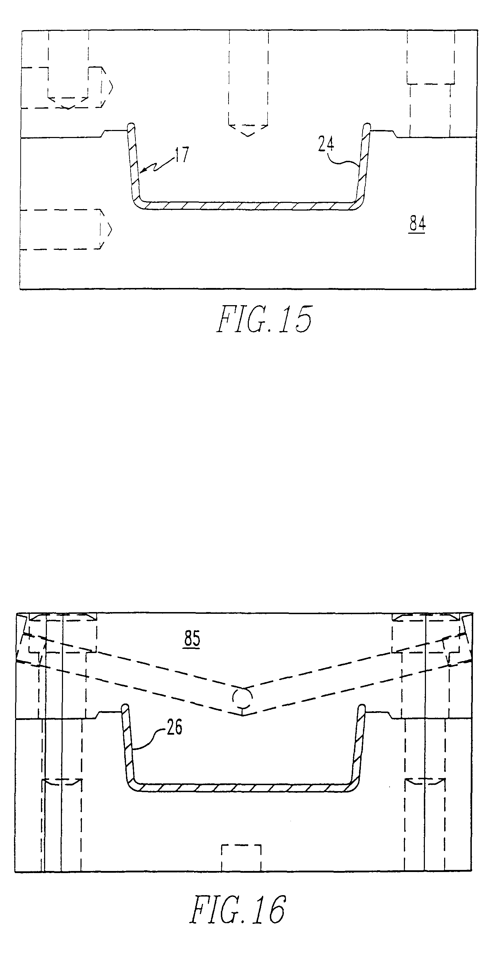

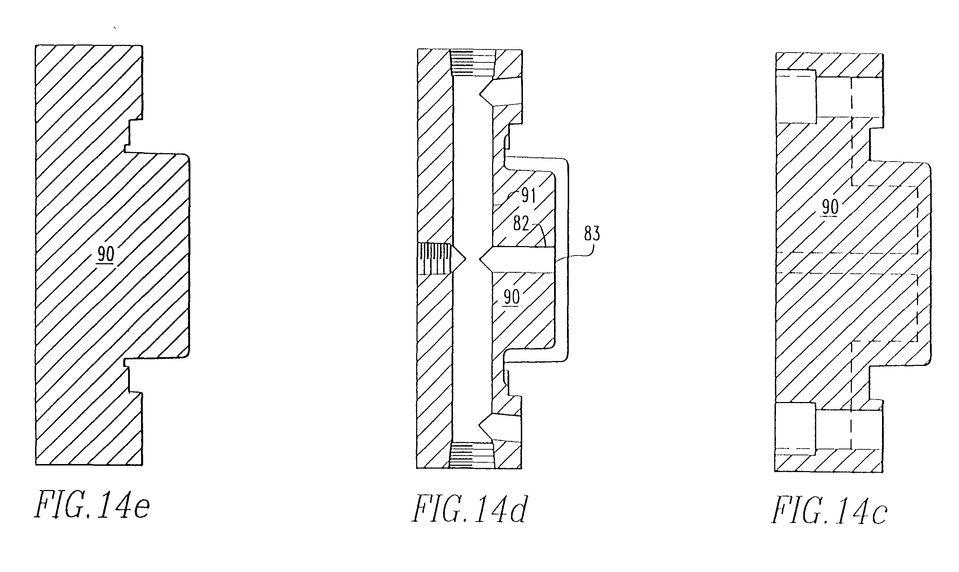

Figure 14a is a schematic representation of the core of the injecting mechanism of the second housing.

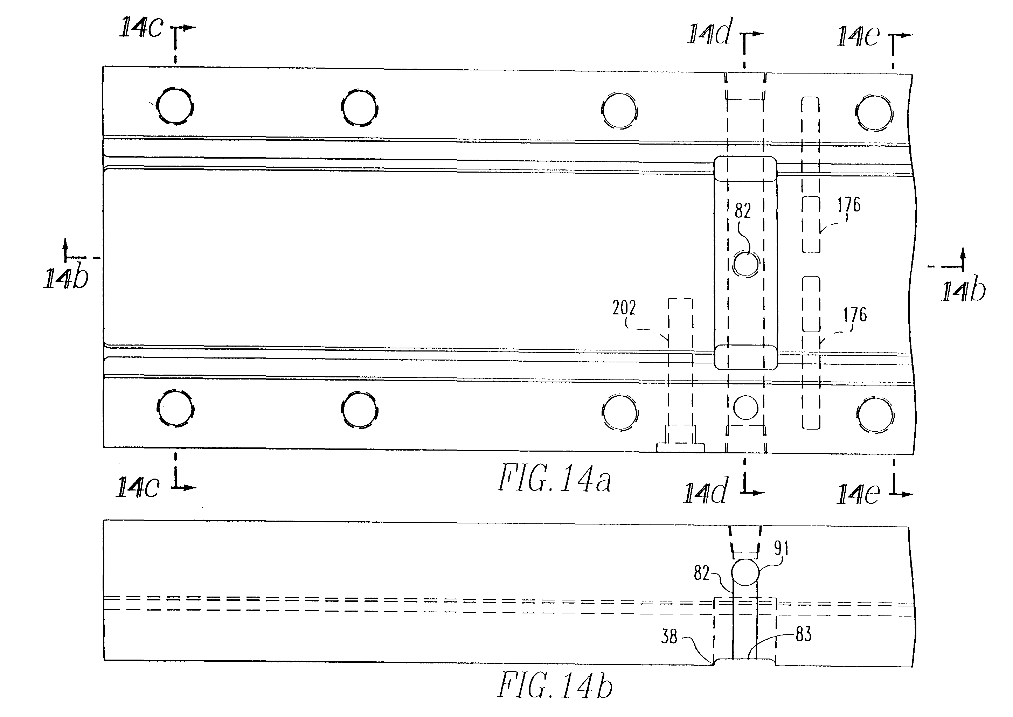

Figure 14b is a schematic representation of Section 14b of figure 14a.

Figure 14c is a schematic representation of Section 14c of figure 14a.

Figure 14d is a schematic representation of Section 14d of figure 14a.

Figure 14e is a schematic representation of Section 14e of figure 14a.

Figure 15 is a schematic representation of the front of the injecting mechanism.

Figure 16 is a schematic representation of the back of the injecting mechanism.

Figure 17 is a schematic representation of the materials distribution.

Figure 18 is a schematic representation of the injecting mechanism in regard to pressure.

Figure 19 is a schematic representation of a cross-section of an injecting mechanism for a solid rod.

Figure 20 is a schematic representation of a cross-section of an injecting mechanism for an angle.

Figure 21 is a schematic representation of a cross-section of an rejecting mechanism for an I beam.

Figure 22 is a schematic representation of a cross-section of and injecting mechanism for a hollow tube.

Figure 23 is a schematic representation of a cross-section of an injecting mechanism for a hollow rectangular shape.

Figure 24 is a schematic representation of a cross-section of an injecting mechanism for a solid plate.

Figure 25 is a schematic representation of a cross-section of an injecting mechanism for another angle.

Figure 26 is a schematic representation of a cross-section of an injecting mechanism for an H beam.

Figure 27 is a schematic representation of a cross-section of an injecting mechanism for a pultruded lipped C channel.

Figure 28 is a schematic representation of a cross-section of an injecting mechanism for a pultruded J channel.

DESCRIPTION OF THE PREFERRED EMBODIMENT

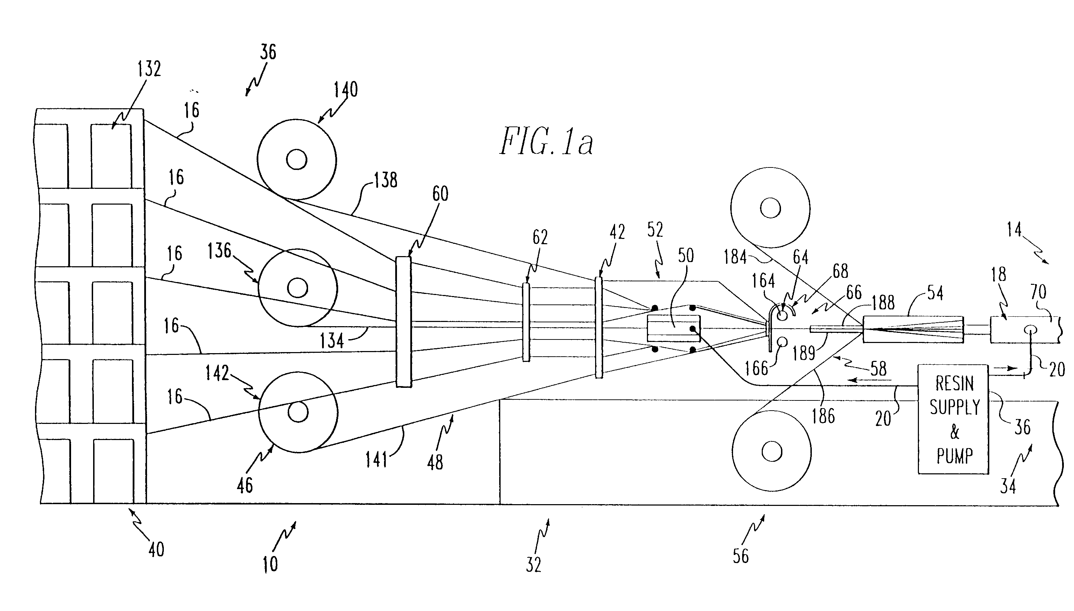

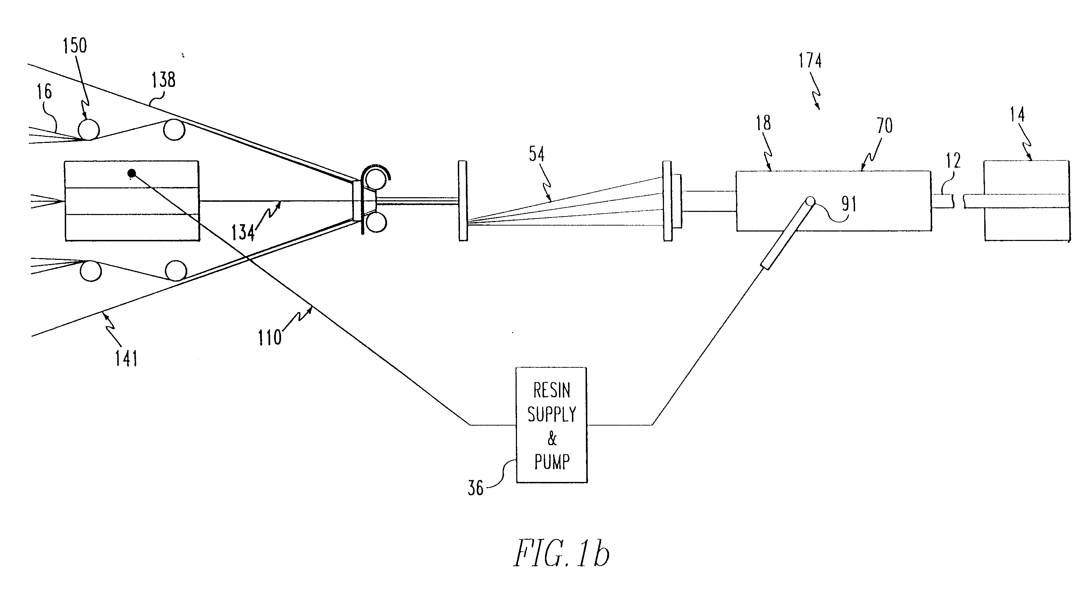

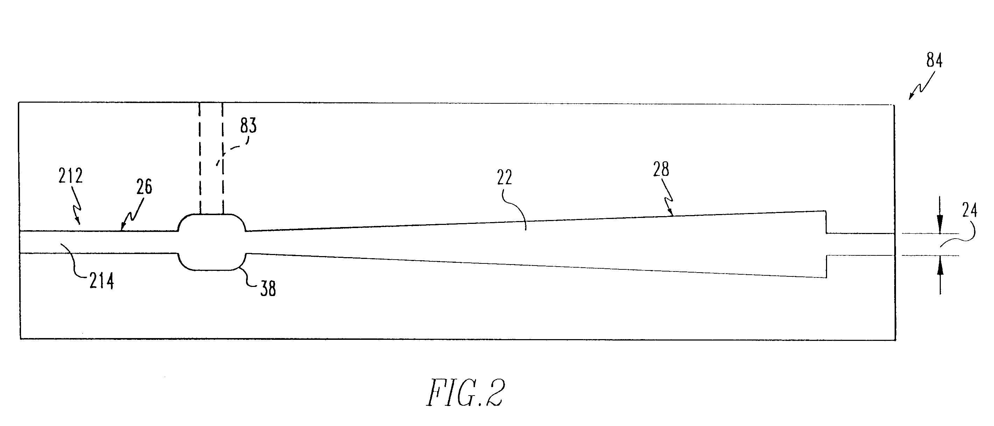

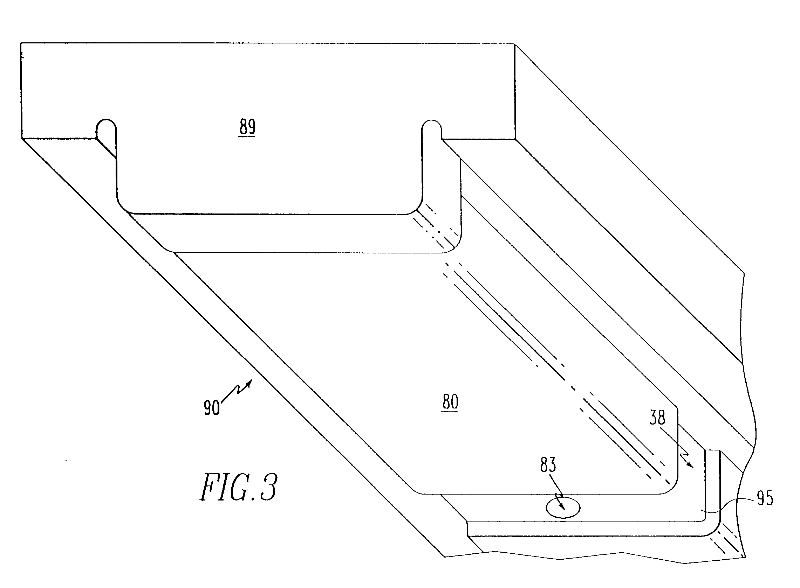

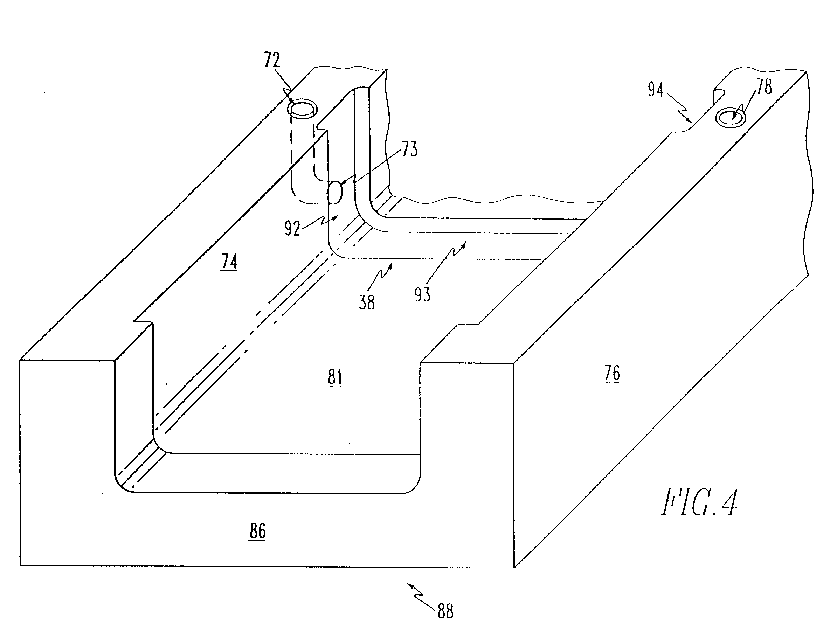

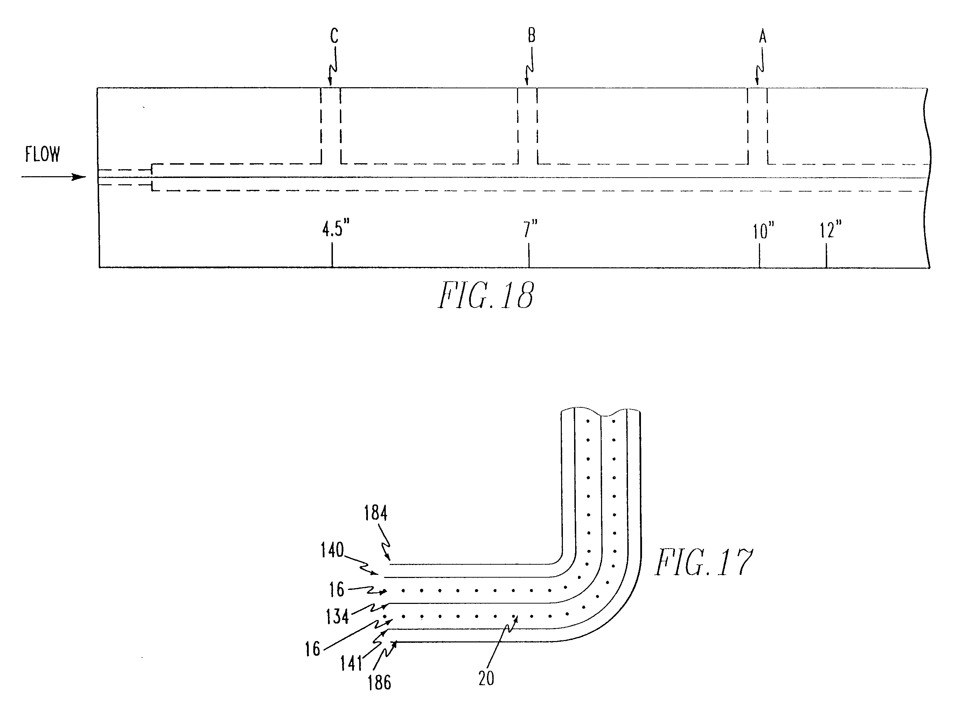

Referring now to the drawings wherein like reference numerals refer to similar or identical parts throughout the several views, and more specifically to figures 1a and 1b thereof, there is shown a system 10 for producing pultruded parts 12 including parts such as ladder parts or parts having structural integrity or parts having a cross sectional shape with a non-linear portion. The system 10 comprises a mechanism 14 for pultruding reinforcement, such as rovings 16. The system 10 comprises a mechanism 18 for injecting resin mixture 20 into rovings 16, as shown in figures 2, 3 and 4. The injecting mechanism 18 comprises a chamber 22 through which the rovings 16 are pulled by the pultrusion mechanism 14. The chamber 22 has in entrance opening 24 in communication with the chamber 22 through which rovings 16 enter the chamber 22 and an exit opening 26 in communication with the chamber 22 through which rovings 16 exit the chamber 22. The entrance opening 24 has a shape with a non-linear portion 17, as shown in figure 15, that conforms with the reinforcement cross section. The chamber 22 has a tapered portion 28 with a taper less than or equal to 1.5° and preferably less than or equal to .5° which accents the impregnation of rovings 16 with resin mixture 20 and increases resin mixture pressure as the tapered portion 28 narrows. Preferably, the chamber 22 is about ten inches in length, the taper is about .0015 per inch/per side and the entrance opening 24 is about one inch in length. The tapered portion 28 is wider near the entrance opening 24 than the exit opening 26. The entrance opening 24 and the exit opening 26 in the chamber 22 preferably have a cross-sectional shape which corresponds to the cross-sectional shape of the reinforcement as it passes through the entrance opening 24, chamber 22 and exit opening 26.

It should be noted that a pultruded part having structural integrity is defined to be a pultruded part whose primary purpose is to be load bearing or to sustain a load satisfactory for its intended purpose, such as steps and rails of a ladder as opposed to braces of a ladder which maintain the structural members in spaced relationship. In a preferred embodiment, the pultruded part 12 meets or exceeds Section 7.12 Flexural Modules Requirement of ANSI Standard A14.5-1992. ANSI Standard A14.5-1992 is incorporated by reference herein. In regard to Section 7.12, the apparent flexural modulus of the composite which forms the part when tested in full section as defined therein is 2.80 x $10^6$ psi (pound-force per square inch) minimum. Distinct therefrom but preferably, the part also meets or exceeds Section 7.13.2 Tensile Strength Test, and Section 7.13.3 Compressive Strength Test of ANSI Standard A14.5-1992. In regard to Section 7.13.2, the composite which forms the part has a minimum tensile of 30,000 psi as defined therein. In regard to Section 7.13.3, the composite that forms the part has a minimum compressive strength of 20,000 psi as defined therein. While ANSI A14.5-1992 is directed to ladder rail, its tests and standards are applicable to many parts formed from composite produced through pultrusion of reinforcement with resin mixture. (In fact, these standards of ANSI A14.5-1992 have been applied to other types of parts besides ladder rail).

Additionally, the pultruded part preferably has electrical insulation quality. A pultruded part having electrical insulation quality is defined to be a pultruded part which meets or exceeds Section 7.10.1 AC Dielectric Strength and Section 7.10.2 DC Current Leakage of ANSI A14.5-1992. In regard to Section 7.10.1, the composite has a dielectric strength of at least 25,000 volts as defined therein. In regard to Section 7.10.2, the composite that forms the part 12 has a DC current leakage which does not exceed 90 microamperes as defined therein. Preferably, the DC current leakage in such a composite that forms the part 12 is between 1 and 10 microamperes. The pultruded part 12 preferably also has weathering quality. A pultruded part 12 with weathering quality meets or exceeds Section 7.9.5 of ANSI A14.5-1992.

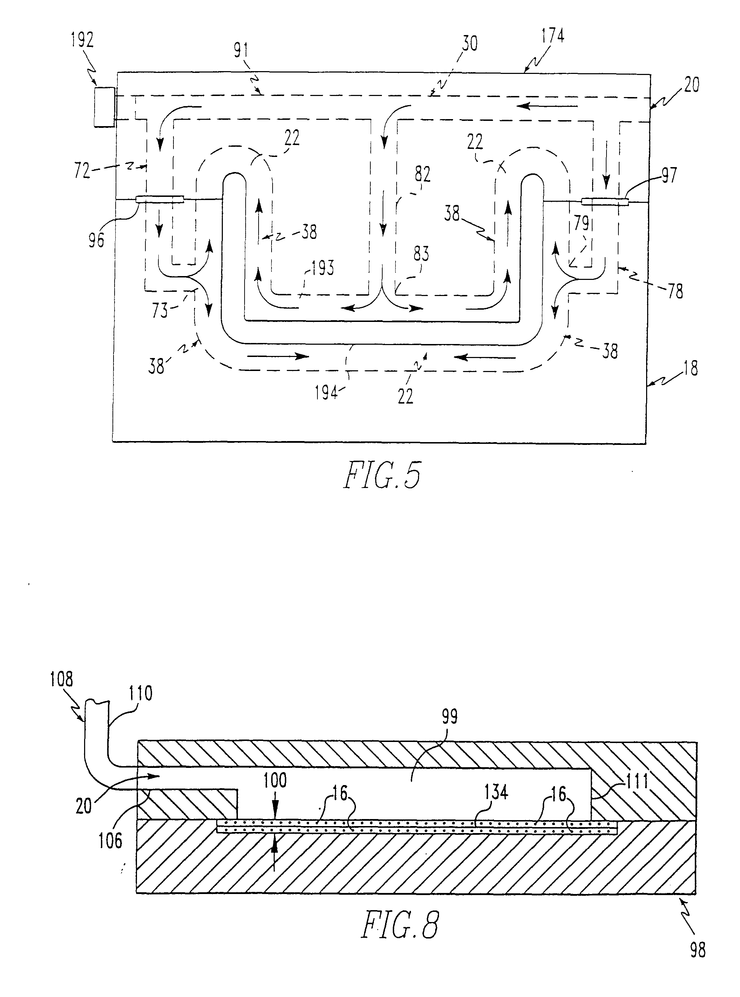

The injection mechanism 18 comprises a resin mixture distribution network 30 in communication with the chamber 22 through which resin mixture 20 is introduced into the chamber, as shown in figure 5. The injecting mechanism 18 is preferably comprised of a mechanism 36 for supplying resin mixture 20 to the chamber 22. The supplying mechanism 36 is connected to the resin mixture distribution network 30. The injection mechanism 18 is disposed adjacent to and in engagement with the pultruding mechanism 14 so the pultrusion mechanism 14 can pull the rovings 16 through the chamber.

The chamber 22 preferably comprises a weir 38 into which the resin mixture 20 is injected into the chamber 22 through the resin mixture distribution network 30. The resin mixture distribution network 30 is connected to the weir 38. The resin mixture distribution network 30 preferably includes a first injection channel 72 connected to the weir 38 through which resin mixture 20 is injected into the weir 38. Preferably, the tapered portion 20 extends across the chamber 22 from the entrance opening 24 to the exit opening 26 with the weir 38 disposed in the chamber 22 closer to the exit opening 26 than the entrance opening 24.

The weir 38 is preferably disposed at the tapered portion 28 where pressure of the resin mixture 20 injected into the chamber 22 is greatest. Preferably, the tapered portion 28 causes pressure of the resin mixture 20 in the chamber 22 to go from atmospheric pressure at the resin mixture front 190 to the pressure of the resin mixture 20 at the weir 38, which is up to about 500 psi and preferably between 325-450 psi. The weir length is preferably about one inch, the weir depth is about 3/8 inches to ½ inch and each injection port has a diameter of 3/8 inches to ½ inch.

The injecting mechanism 18 preferably includes a first side 74 and a second side 76 opposing the first side 74. Preferably, the first and second sides are essentially parallel and extend perpendicularly from the top 80 and the bottom 81. The resin mixture distribution network 30 preferably comprises a second injection channel 78 through which resin mixture 20 is injected into the weir 38. The first injection channel 72 has a first injection port 73 in the first side 74 through which resin mixture 20 from the first injection channel 72 enters the chamber 22 and the second injection channel 78 has a second injection port 79 in the second side 76 through which resin mixture 20 from the second injection channel 78 enters the chamber 22.

Preferably, the injecting mechanism 18 includes a top 80 connected to the first side 74 and the second side 76, and a bottom 81 connected to the first side 74 and the second side 76. The bottom 81 opposes the top 80. The resin mixture distribution network 30 preferably comprises a third injection channel 82 having a third injection port 83 in the top 80 through which resin mixture 20 is injected from the third injection channel 82 into the weir 38. The resin mixture distribution network 30 preferably comprises an internal channel 91 disposed in the top 80 which connects with the first, second and third injection channel to provide resin mixture 20 to them. The injecting mechanism 18 preferably includes a first O-ring seal 96 disposed between the internal channel 91 and the first injection channel 72 and a second O-ring seal 97 disposed between the internal channel 91 and the second injection channel 78.

Preferably, the first side 74 preferably has a first weir channel 92, the second side 76 has a second weir channel the bottom 81 has a bottom weir channel 93 and the top 80 has a top weir channel 95. The top weir channel 95 opposes the first, second and third weir channels. The first weir channel 92 aligns with the bottom weir channel 93. The bottom weir channel 93 aligns with the second weir channel 94. The first, second, bottom and top weir channels define the weir 38.

The injecting mechanism 18 preferably includes a front 84, as shown in figure 15, and a back 85, as shown in figure 16, opposing the front 84. The front 84 and back 85 are connected to the first side 74, second side 76, top 80 and bottom 81. The entrance opening 24 is disposed in the front 84 and the exit opening 26 is disposed in the back 85. The front 84, back 85, first side 74, second side 76, top 80 and bottom 81 define the chamber 22. Preferably, the bottom 81, the first side 74, the second side 76, a lower portion 86 of the front 84 and lower portion 87 of the back 85 are one continuous piece and form a cavity 88. Additionally, the top 80 and an upper portion 89 of the back 85 are one continuous piece and form a core 90. The core 90 and cavity 88 mate together with the upper and lower portion of the front 84 and the back 85 aligning together to define the entrance opening 24 and exit opening 26, respectively.

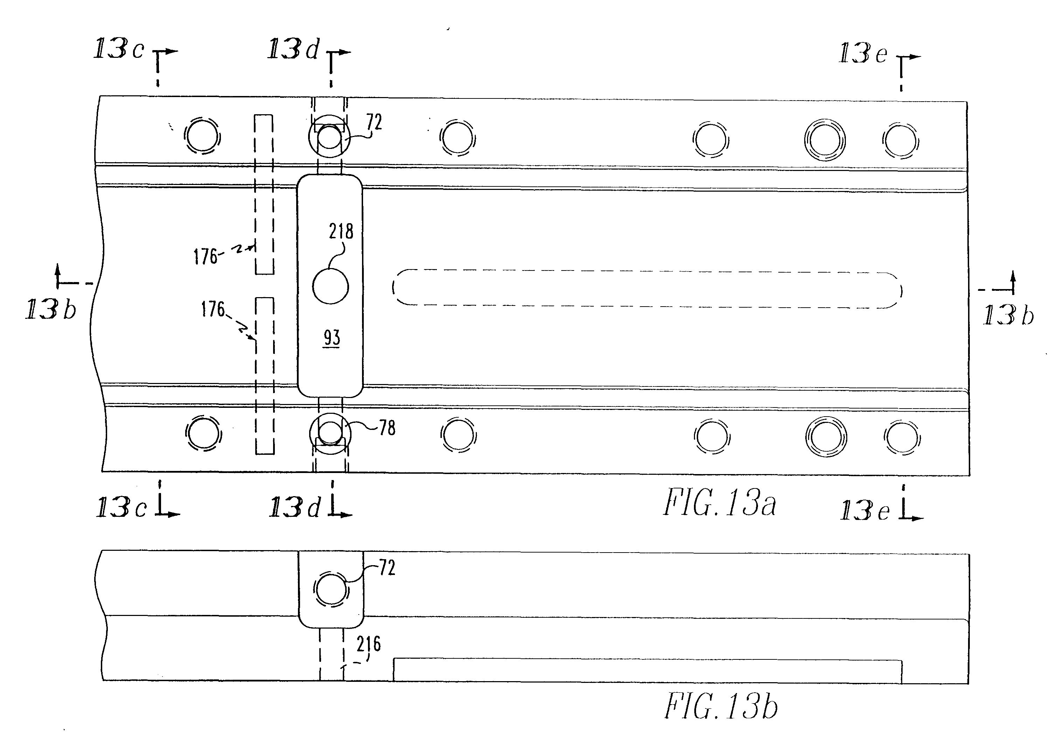

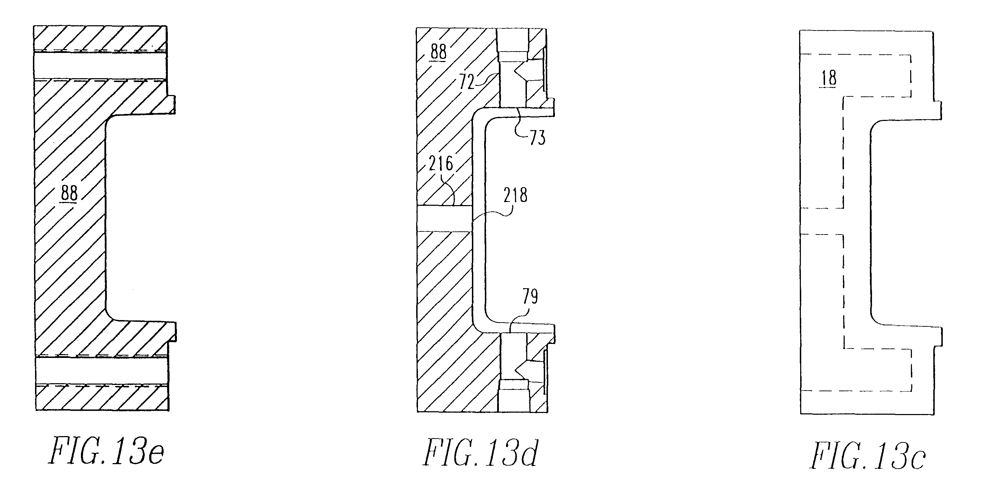

As shown in figure 13b, the resin mixture distribution network 36 of the injecting mechanism 18 can also have a fourth injection channel 216 with a fourth injection port 218 through which resin mixture from the fourth injection port 218 enters the chamber 22. The fourth injection port 218 is connected to the bottom weir channel 93. The fourth injection port 218 has piping (not shown) connected to the resin mixture supply 36 to obtain resin mixture from the resin mixture supply, and not the internal channel 91 to which the first, second and third injection channels are connected to receive resin mixture. The fourth injection channel 216 provides additional resin mixture to the weir 38 at the bottom of the chamber 22.

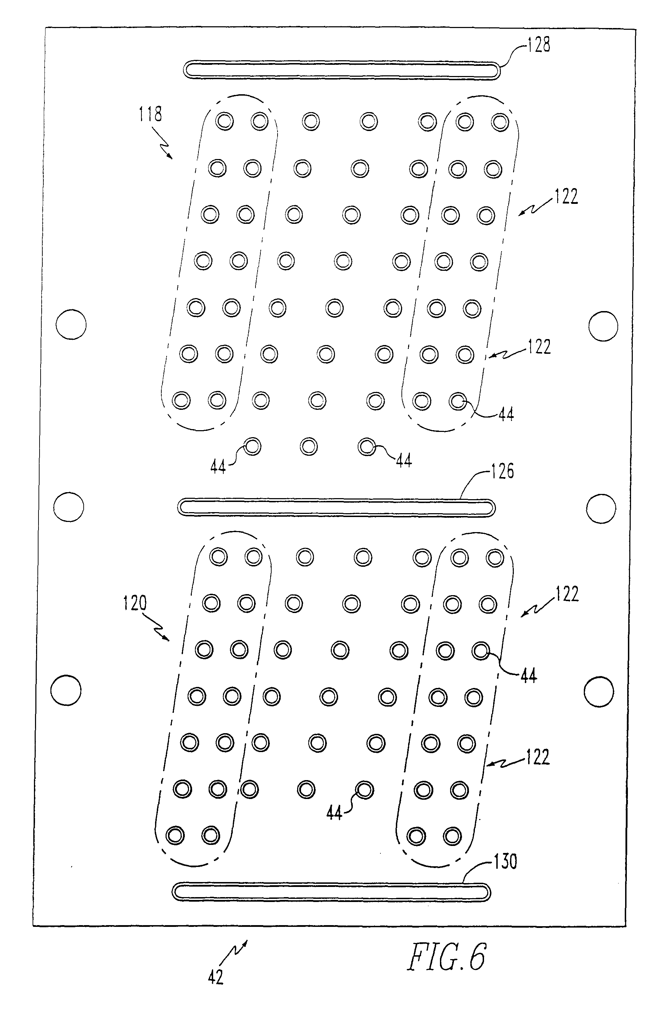

Additionally, the system comprises a mechanism 42 for providing rovings 16 formed into a desired cross section having a shape with a non-linear portion to the chamber 22 through the entrance opening 24. The providing mechanism 42 is disposed adjacent to and in engagement with the injection mechanism 18 so rovings 16 from the providing mechanism 32 can enter the entrance opening 24 of the injection mechanism 18. The providing mechanism 32 preferably comprises a rovings supply 40 that provides rovings 16 to the injecting mechanism 18. The rovings supply 40 is disposed adjacent the injecting mechanism 18. Preferably, the providing mechanism 32 comprises a first carding plate 42 disposed between the rovings supply 40 and the injecting mechanism 18, as shown in figure 6. The first carding plate 42 is for guidance, orientation and placement control of reinforcement such as rovings 16 and/or mat. The rovings 16 pass through the first carding plate 42. The first carding plate 42 aligns the rovings 16 into a desired spaced relationship to achieve a uniform distribution pattern of rovings 16 in the ladder part 12 when it is made in the making mechanism. The first carding plate 42 has holes 44 through which the rovings 16 pass. The holes 44 form a pattern where the holes 44 do not overlap.

The first carding plate 42 for controlling placement of reinforcement for resin mixture injection comprises a plate 112 having a series of holes 44 which do not overlap and carding slots 116 through which rovings 16 and mat 28, respectively, extend. Preferably, each hole 44 is spaced evenly from a subsequent hole 114. Each hole 44 is preferably spaced a distance A from another hole 44 where

$$A= \frac{(\text{distance between outermost rovings d})}{(\text{\# of holes -1})}$$

Preferably, the holes 44 form a first set 118 and a second set 120 of a series of rows 122 with a first hole 124 of each row 122 offset a distance A relative to an immediate lower row 122. The first carding plate 42 preferably comprises a middle slot 126 disposed between the first and second sets of series of rows 122. There is a top slot 128 with the first set 118 of series of rows 122 disposed between the top slot 128 and the middle slot 126. Additionally, there is a bottom slot 130 with the second set 120 of series of rows 122 disposed between the middle slot 126 and the bottom slot 130. The location of the first carding plate 42 is selected relative to a desired angle and back tension to ensure control of the rovings.

The system 10 comprises a mechanism 44 for making the resin mixture 20 that has been combined with rovings 16 in the injection mechanism 18 into the part 12. The making mechanism 34 is disposed adjacent to and in engagement with the injecting mechanism 18 to receive rovings 16 with resin mixture 20 from the injecting mechanism 18 and disposed adjacent to and in engagement with the pultruding mechanism 14 so the rovings 16 can be pulled through the making mechanism 34 by the pultruding mechanism 14. Preferably, the making mechanism 34 comprises a pultrusion die 70 which cures resin mixture 20 with the rovings 16, mat 48 and veil 58 into a composite that forms the part. The pultrusion die 70 is disposed adjacent the injecting mechanism 18 to receive rovings 16, mat 48 and veil 58 therefrom.

The providing mechanism 32 preferably comprises a mat supply 46 which provides mat 48 for the ladder part 12. The mat supply 46 is disposed adjacent the rovings supply 40 and the first carding plate 42 and supplies mat 48 to the pultruding mechanism 14 through the first carding plate 42, the injecting mechanism 18 and making mechanism 34. The pultruding mechanism 14 pulls the mat 48 from the mat supply 46 through the first carding plate 42 which aligns the mat 48 into a desired position with rovings 16 and then through the injecting mechanism 18 where resin mixture 20 is combined with the mat 48 and the rovings 16 and then through the making mechanism 34 where the resin mixture 20 with rovings 16 and mat 48 is made into the ladder part 12.

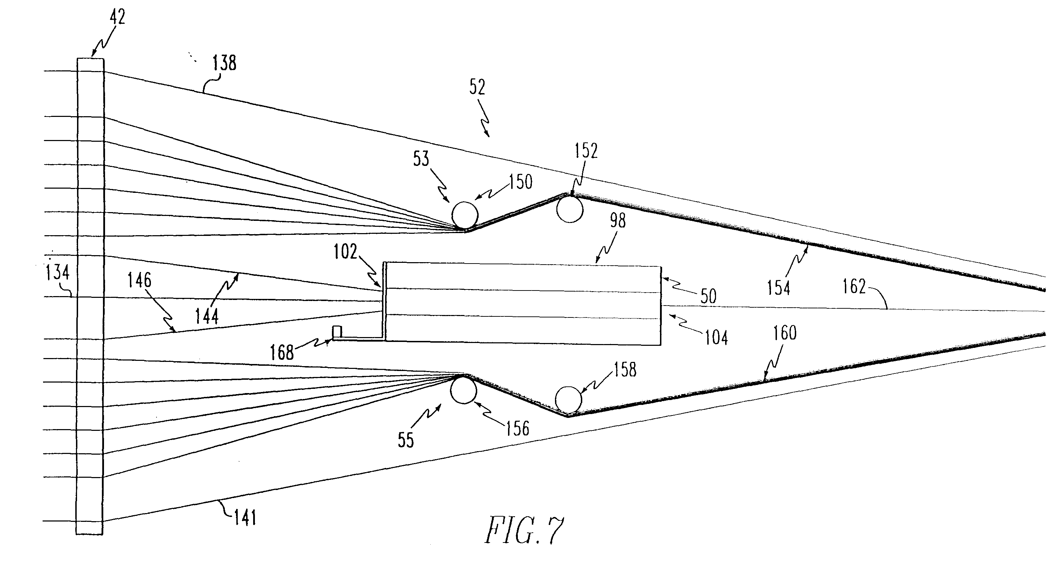

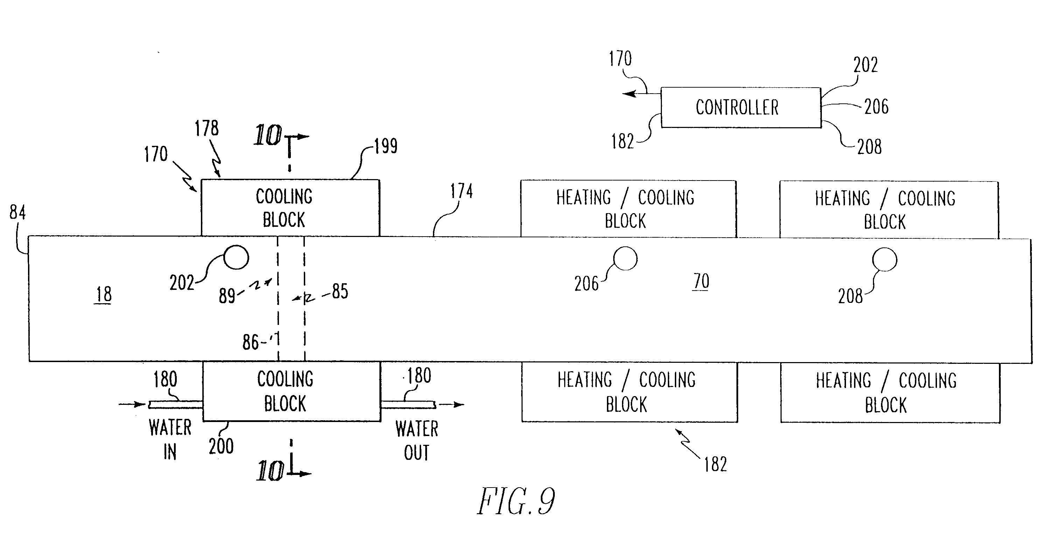

The providing mechanism 32 preferably comprises a pre-wet assembly 50 disposed between the carding plate 42 and the injecting mechanism 18, as shown in figures 7 and 8. The pre-wet assembly 50 impregnates center rovings 16 of the uniform distribution pattern and middle mat 48 with resin mixture 20 before they reach the injecting mechanism 18.

The pre-wet assembly 50 preferably comprises a pre-wet housing 98 having a pre-wet chamber 99 into which resin mixture 20 is introduced. The pre-wet housing also has a slot 100 through which reinforcement passes. The slot 100 is connected to the pre-wet chamber 99 so resin mixture 20 in the pre-wet chamber 99 can contact reinforcement in the slot 100. The slot 100 has a slot entrance 102 and a slot exit 104 through which the reinforcement enters and exits the slot 100, respectively. Preferably, the slot 100 has a width essentially the width of the reinforcement passing through it, and a height of 0.070 inches.

Additionally, the pre-wet injection housing has a pre-wet injection channel 106 connected to the pre-wet chamber 99 through which resin mixture 20 is introduced into the pre-wet chamber 99. The pre-wet assembly 50 preferably also comprises a pre-wet resin mixture delivery system 108 that provides resin mixture 20 to the pre-wet injection channel 106 at a desired pressure corresponding to the slot 100 dimension.

The pre-wet resin mixture delivery system 108 preferably includes piping 110 which has a constant diameter but a variable length corresponding to speed at which reinforcement moves through the slot 100, the slot dimension, the resin mixtures' viscosity and pressure drop desired of the resin mixture 20 pressure from entrance into the piping 110 to introduction into the pre-wet chamber. The piping 110 causes a pressure drop in the resin mixture 20 from up to 500 psi and preferably 350-425 psi to 10-20 psi in the pre-wet chamber 99. The piping 110 is preferably made of nylon tubing having an outside diameter of 0.250 inches and an inside diameter of 0.150 inches. If the middle mat 134 width is 3.5 inches or 4.25 inches or 5.25 inches then the tubing length is 9 ft. or 8 ft. or 6 ft., respectively.

The resin mixture supplying mechanism 36 can be a continuous mixing resin mixture supply where the individual components of the resin mixture 20 are maintained separate but feed continuously into a mixing chamber, as is well known in the art. A pump pressures the resin mixture 20 in the mixing chamber to the desired pressure. The pressurized resin mixture 20 is then provided to the injection chamber 18 or the pre-wet assembly 50 through piping connected to the injecting mechanism 18. Preferably, the resin mixture 20 is formed in a batch process where the individual components are mixed together in batches, as is well known in the art. Each batch is then connected to a pump which then pumps the resin mixture 20 at a desired pressure to the injecting mechanism 18 on the pre-wet assembly 50. Thus, there is preferably high pressure piping extending from the resin mixture supplying mechanism 36 to the injecting mechanism 18 and low pressure piping extending from the resin mixture supplying mechanism 36 to the pre-wet assembly 50. The high pressure piping delivers resin mixture at a pressure of about 325-450 psi while the low pressure piping delivers resin mixture to the pre-wet assembly at a pressure of about 10-20 psi.

The providing mechanism 32 preferably also comprises a forming/tension mechanism 52 disposed adjacent the pre-wet assembly 50 through which rovings 16 are pulled by the pultruding mechanism 14. The forming/tension mechanism 52 tensions the rovings 16 so essentially no shifting of rovings 16 occurs and they are maintained in a desired distribution as they are pulled to the injecting mechanism 18.

The providing mechanism 32 preferably also comprises a forming station 54 which forms rovings 16 and mat 48 into a desired cross-sectional shape. The forming station 54 is disposed adjacent the injecting mechanism 18 and the pre-wet assembly 50 and forming/tension mechanism 52 to receive rovings 16 and mat 48 from the pre-wet assembly 50 and the forming/tension mechanism 52 and form them into the desired cross-section, and then provide rovings 16 and mat 48 in the desired cross-section to the entrance opening 24 of the injecting mechanism 18.

The providing mechanism 32 preferably comprises a veil supply 56 disposed adjacent the forming mechanism 54 to provide veil 58 to the forming station 54 so the forming station 54 forms rovings 16, mat 48 and veil 58 into the desired cross section. The veil supply 56 is in engagement with the pultruding mechanism 14 so veil 58 is pulled from the veil supply 56 to the forming station 54 and to the injecting mechanism 18 and then with rovings 16 and mat 48 to the making mechanism 34.

Preferably, the providing mechanism 32 comprises a carding grid 60 disposed adjacent the rovings supply 40 and the mat supply 46, and a second carding plate 62 disposed adjacent to the carding grid 60 and the first carding plate 42. The rovings 16 from the roving supply 40 and mat 48 from the mat supply 46 are pulled through the carding grid 60 which distributes rovings 16 and mat 48 in a desired orientation, and the second carding plate 62, which distributes rovings 16 and mat 48 in a desired orientation by the pultruding mechanism 14.

The providing mechanism 32 preferably comprises a squeezing mechanism 64 which form rovings 16 from the forming/tension mechanism 52 and rovings 16 and mat 48 from the pre-wet assembly 50, and mat from the mat supply 46 into a sandwich 66. The squeezing mechanism 64 is disposed adjacent to the pre-wet assembly 50 and to the forming/tension mechanism 52 to receive rovings 16 and mat 48 from the pre-wet assembly 50 and the forming/tension mechanism 52, and disposed to receive mat 48 from the mat supply 46. Additionally, the providing mechanism 32 comprises a horizontal guide 68 disposed adjacent to the squeezing mechanism 64 to receive rovings 16 and mat 48 that has been formed into the sandwich 66 by the squeezing mechanism 64 and disposed adjacent to the forming station 54 so the rovings 16 and mat 48 formed into a sandwich 66 passes to the forming station 54 as they are pulled by the pultruding mechanism 14.

The forming/tension mechanism 52 preferably comprises a top forming/tension portion 53 disposed above the pre-wet assembly 50 to tension and reduce shifting of the rovings 16 above and extending past the pre-wet assembly 50. The forming/tension mechanism 52 is also comprised of a bottom forming/tension portion 55 disposed below the pre-wet assembly 58 to tension and reduce shifting of the rovings 16 below and extending past the pre-wet assembly 50.

Preferably the top forming/tension portion 53 comprises a first rovings tension bar 150, and a second rovings tension bar 152 in spaced relationship with the first rovings tension bar 150 such that rovings 16 which pass under and in contact with the first rovings tension bar 150 and then extend over and in contact with the second rovings tension bar 152 are caused to be made taut and essentially prevented from shifting and flatten into a smooth even top layer 154 of rovings 16. The first and second rovings tension bar are preferably attached to the pre-wet assembly 50. The bottom forming/tension portion 55 preferably comprises a third rovings tension bar 156, and a fourth rovings tension bar 158 in spaced relationship with the third rovings tension bar 156 such that rovings 16 which pass over and in contact with the third rovings tension bar 156 and then extend under and in contact with the fourth rovings tension bar 158 are caused to be made taut and essentially prevented from shifting and flatten into a smooth even bottom layer 160. The third and forth rovings tension bar are preferably attached to the pre-wet assembly 50.

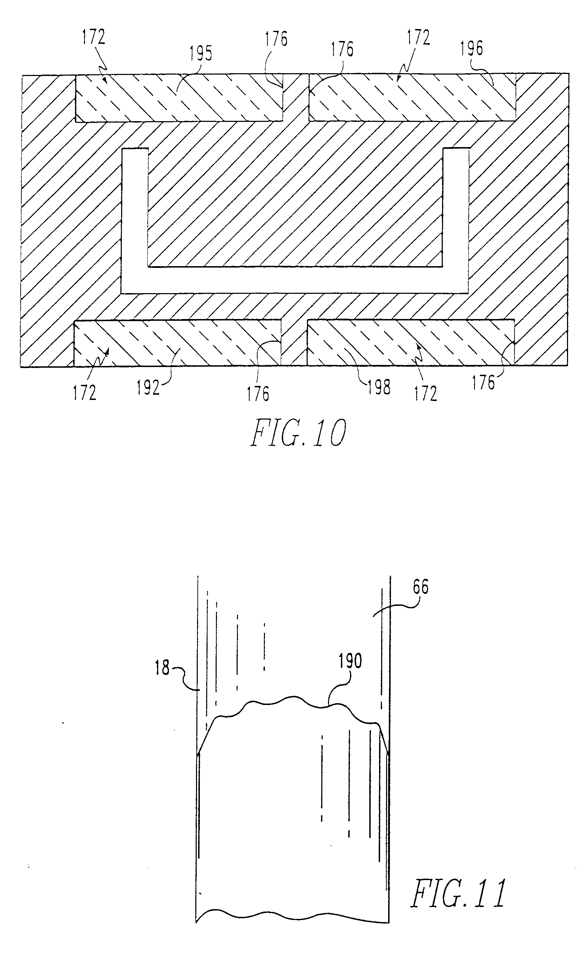

The system 10 preferably includes a cooling mechanism 170 in thermal contact with the injecting mechanism 18 to maintain resin mixture 20 injected into the chamber 22 at below a desired temperature, as shown in figure 9. The system 10 preferably also includes thermal insulation 172 disposed between the injecting mechanism 18 and the pultrusion die 70. The injecting mechanism 18 and the pultrusion die 70 are preferably one continuous piece forming a second housing 174 with rovings 16 exiting the exit opening 46 and passing directly into the pultrusion die 70. The second housing 174 preferably has insulation slots 176 disposed between the chamber 22 of the injecting mechanism 18 and the pultrusion die 78. The insulation 172 is disposed in the insulation slots 176, as shown in figure 10.

Additionally, the cooling mechanism 170 preferably includes cooling blocks 178 through which coolant 180 flows when the resin mixture 20 reaches a pre-determined temperature to cool the resin mixture 20 below a desired temperature. The cooling blocks 178 are connected to the second housing 174 adjacent the chamber 22 and insulation slots 176. The system 10 preferably includes heating/cooling blocks 182 connected to the second housing 174 and adjacent the pultrusion die 70 to control the temperature of the resin mixture 20 in the pultrusion die 70.

The present invention also pertains to a housing, such as the second housing 174 through which reinforcement for pultruded products pass. The housing comprises a mechanism 18 for injecting resin mixture 20 into reinforcement. The injecting mechanism 18 comprises a chamber 22 through which the reinforcement passes. The chamber 22 has an entrance opening 24 in communication with the chamber 22 through which reinforcement enters the chamber 22 and an exit opening 26 in communication with the chamber 22 through which reinforcement exits the chamber. The injecting mechanism 18 comprises a resin mixture distribution network 30 in communication with the chamber 22 through which resin mixture 20 is introduced into the chamber 22. The housing also comprises a pultrusion die 70 which cures resin mixture 20 with the reinforcement from the injecting mechanism 18. The pultrusion die 70 is integrally connected forming one continuous piece with the injecting mechanism 18 to receive reinforcement with resin mixture 20 from the injecting mechanism.

Preferably, the pultrusion die 70 has a pultrusion die chamber 214 through which the reinforcement with resin mixture 20 passes and in which the resin mixture 20 with the reinforcement is cured. The pultrusion die 70 preferably has an entrance opening 212 in communication with the exit opening 26 of the injection chamber 22 to receive the reinforcement with resin mixture 20 passing from the exit opening 26. Additionally, there is preferably thermal insulation 172 disposed between the injecting mechanism 18 and the pultrusion die 70.

The present invention pertains to an injecting mechanism 18 for injecting resin mixture 20 into reinforcement. The injecting mechanism 18 comprises a top 80. There is a first side 74 connected to the top 80. There is a bottom 81 connected to the first side 74. There is a front 84 connected to the first side 74, the top 80 and the bottom 81. There is a back 85 connected to the first side 74, the top 80 and the bottom 81. The injecting mechanism 18 also comprises a resin mixture distribution network 30 in communication with the chamber 22 through which resin mixture 20 is injected into the chamber 22. The resin mixture distribution network 30 has a first channel 72 through which resin mixture is injected into the chamber 22 at the first side 74. The injecting mechanism 18 comprises a chamber 22 having a tapered portion 28 with a taper of less than 1.5 degrees that accents impregnation of reinforcement with resin mixture 20 and increases resin mixture pressure as the tapered portion 28 narrows. The chamber 22 is defined by the top 80, first side 74, bottom 81, front 84 and back 85. The injecting mechanism 18 comprises an entrance opening 24 in communication with the chamber 22 through which reinforcement enters the chamber 22. The entrance opening 24 is disposed in the front 84. Additionally, there is in exit opening 26 through which reinforcement exits the chamber 22. The tapered portion 28 is wider near the entrance opening 24 than the exit opening 26. The exit opening 26 is disposed in the back 85.

Generally, it is of utmost importance to prevent the shifting or movement of any aspect of the sandwich 66, be it rovings, mat or veil. The reinforcement that forms the sandwich 66 is carefully positioned by the various carding plates, forming/tension assembly, forming station, etc. so the desired structural integrity is obtained in the finished pultruded section. Shifting or movement of the reinforcement which forms the sandwich creates the possibility of weakness in certain areas of the pultruded section because the reinforcement is not properly distributed.

In the operation of the preferred embodiment, fiberglass rovings 16 from rovings spools 132 of the rovings supply 40 extend to the carding grid 60 which organizes the rovings 16 into a desired orientation as is well known in the art, as shown in figure 1. Additionally, middle mat 134 from a middle mat stand 136 of the mat supply 46 extends through the carding grid 60 which places the middle mat 134 in a desired orientation relative to the rovings 16.

From the carding grid 60, the rovings 16 and middle mat 134 that extends to the carding grid 60 passes to the second carding plate 62. The second carding plate 62 maintains the rovings 16 and middle mat 134 in a desired orientation as is well known in the art.

From the second carding plate 62 the rovings and middle mat 134 extend through the first carding plate 42, as shown in figure 6. Also extending through the first carding plate 42 is the top mat 138 from the top mat stand 140 and a bottom mat 141 from the bottom mat stand 142 of the mat supply 46.

The first carding plate 42 receives the top, middle, and bottom mat and the rovings 16 from the second carding plate 62. The first carding plate 42 is used to control placement of the rovings 16. The first carding plate 42 consists of a series of holes 114 and slots which assist in the proper placement of both rovings 16 and structural mat. The hole 114 pattern on the first carding plate 42 is designed to place each roving 16 in a specific location to provide a uniform layer of rovings throughout the composite ultimately being formed or in whatever quantities required to provide extra rovings 16 at desired locations in the composite. In order to achieve the uniform distribution of rovings 16, a staggered hole 114 pattern is utilized.

The first carding plate 42 is comprised of a top slot 128, a middle slot 126 and a bottom slot 130, with the metal slot 126 between the top slot 128 and the bottom slot 130. The top, middle and bottom slots are for guiding the top, middle and bottom mat through the first carding plate 42 so they are maintained in a desired orientation. Between the top slot 128 and the middle slot 126 is a first set 118 of rows 122 of holes 114. Additionally, between the middle slot 126 and the bottom slot 130 is a second set 120 of rows 122 of holes 114. The holes 114 are distributed such that a pattern is formed where each hole does not overlap and is spaced evenly from a subsequent hole 114. The first hole 124 of each row 122 is offset a distance A from the first hole 124 of the previous row 122 of holes. The distance A is determined by the following equation.

$$A = \frac{\text{(distance between outermost rovings d)}}{\text{(\# of holes -1)}}$$

This overall hole pattern and slot relationship provides for a uniform distribution of the rovings 16 and mat to form the composite.

From the first carding plate 42, the middle mat 134 and a first layer 144 of rovings 16 disposed above the middle mat 134 and a second layer 146 of rovings 16 extend into the pre-wet assembly 50, as shown in figures 7 and 8. The top mat 138 extends above and past the pre-wet assembly 50 and the bottom mat 141 extends below and past the pre-wet assembly 50. The rovings 16 extending from the first set 118 of rows 122, except for the first layer 144 of rovings, extend to the forming /tension mechanism 52 above the pre-wet assembly 50. The rovings 16 from the second set 120 of rows of the first carding plate 42, except for the second layer 146 of rovings 16, extend to the forming/tension mechanism 52 disposed below the pre-wet assembly 50.

The forming/tension mechanism 52 is comprised of a first rovings tension bar 150, and a second rovings tension bar 152 in spaced relationship with the first rovings tension bar 150. The rovings 16 from the first set 118 of rows 122 extend underneath and in contact with the first rovings tension bar 150. From the first rovings tension bar 150, these rovings 16 extend over and in contact with the second rovings tension bar 152. The first rovings tension bar 150 and the second rovings tension bar 152 are in a spaced relationship such that the rovings passing between them are pulled taut by a force being introduced to the rovings as the first and second rovings tension bar are moved relative to each other. By being taut, the rovings are essentially prevented from shifting out of their desired orientation and are caused to flatten into a smooth even top layer 154.

The forming/tension mechanism 52 is also comprised of a third rovings tension bar 156, and a fourth rovings tension bar 158 in spaced relationship with the third rovings tension bar 156. The rovings 16 from the second set 120 of rows 122 extend over and in contact with the third rovings tension bar 156. From there, these rovings 16 extend underneath and in contact with the fourth rovings tension bar 158. In a similar manner as described above in regard to the first and second rovings tension bar, the third and fourth rovings tension bar are moved relative to each other to apply a force on the rovings 16 passing between them, and forming them into a smooth even bottom layer 160. The first and second rovings tension bar, and the third and fourth rovings tension bar are spaced 2 inches apart and are each approximately 3/8 inches in diameter.

The first layer 144 above the middle mat 134, the middle mat 134 and the second layer 146 below the middle mat extend into the slot entrance 102 of the pre-went housing 98. These rovings and the middle mat 134 extend from the slot entrance 102 into the slot 100. The slot 100 connects with the pre-wet chamber 99 so resin mixture in the pre-wet chamber 99 wets the middle mat 134, the first layer 144 and second layer 146 of rovings 16. The resin mixture 20 in the pre-wet chamber 99 is at a pressure of between 10-20 psi and is delivered into the pre-wet chamber 99 through a pre-wet injection channel 106 in the pre-wet housing 98 that connects with the pre-wet chamber 99. In turn, resin mixture 20 is supplied to the pre-wet injection channel 106 from piping 110 connected to the pre-wet injection channel 106 of the pre-wet housing 98. The piping is plastic and has a 5/32 inch constant inside diameter, but has a variable length. The fundamental theories of pressure drop with a pipe are used to obtain a pressure drop in the resin mixture 20 from 350-425 psi to 10-20 psi in the pre-wet chamber 99. The length of the piping 110 is a function of such factors as pultrusion speed, type of section, viscosity and temperature of the resin mixture, type of rovings and mat which extend through the slot 100. The resin mixture 20 is introduced from the piping 110 to the pre-wet injection channel 106 where it is transferred to the pre-wet weir 111 of the pre-wet chamber 99. Once in the pre-wet weir 111, the resin mixture 20 is applied to the middle mat 134, first layer 144 and second layer 146 of rovings. The amount of resin mixture 20 contacting the first and second layer of rovings and the middle mat 134 is controlled by the slot dimension. The width of the slot 100 is the same as the width of the middle mat 134. The height of the slot 100 is 0.070 inches. Below the slot entrance 102 and extending from the pre-wet housing 98 is a drip gutter 168. The drip gutter 168 prevents resin mixture 20 from dripping onto rovings below the pre-wet assembly 50 and causing serious problems such as glass distribution problems.

The pre-wet assembly 50 is typically used when a resin mixture having a higher viscosity is used. Because of the higher viscosity, the resin mixture may not fully impregnate the middle mat 134 and center most rovings 16 through the outer mats, veils and rovings 16 in the chamber 22. The pre-wet assembly 50 ensures that the middle mat 134 and center most rovings 16 are properly impregnated with resin mixture 20.

From the slot 100 the middle mat 134 and first and second layers of rovings 16 which have been wetted with resin mixture 20 extend out of the pre-wet housing 98 through a slot exit 104 that is connected to the slot 100.

The middle mat 134 with the first layer and second layer of rovings 60, in the form of a middle layer 162, extends from the pre-wet housing 98 to a horizontal guide 68. The top layer 154 and the bottom layer 160 also extend to the horizontal guide 68. The horizontal guide 68 has a window (not shown) through which the layers pass, which controls and prevents lateral shifting of the mats and rovings 16 of the layers, as is well known in the art. From the horizontal guide 68, the top layer 154, the bottom layer 160, and the middle layer 162 extend through the squeezing mechanism 64 which forms these layers into a sandwich 66 and squeezes excess resin mixture 20 from them, as is well known in the art. The squeezing mechanism 64 comprises a top squeeze bar 164 and a bottom squeeze bar 166 aligned with and directly below the top squeeze bar 164. The sandwich 66 is formed as the layers move past and between the top squeeze bar 164 and bottom squeeze bar 166 and are squeezed together by the squeeze bars, as is well known in the art.

The sandwich 66 that is formed by the squeezing mechanism 64 and the horizontal guide 68 extends through the forming station 54. An upper veil 184 from the veil supply 56 and a lower veil 186 from the veil supply 56 also extends to the forming station 54 and combines with the sandwich 66 to cover the sandwich's 66 top 188 and bottom 189, respectively. Forming station 54 forms the sandwich 66 into a desired cross-section, such as a C shape or lipped C shape in regard to a ladder rail, as is well known in the art.

After the sandwich 66 has been formed into a desired cross-section by the forming station 54, the sandwich 66 extends to the entrance opening 24 of the injecting mechanism 18. The sandwich 66 then extends into the chamber 22 of the injecting mechanism 18, as shown in figures 2, 3, 4 and 5. The chamber 22 has a cross-section which conforms with the cross-section of the sandwich 66. As the sandwich 66 extends through the chamber 22 from, the sandwich 66 contacts a resin mixture front 190, as shown in figure 11. Between the entrance opening 24 and the resin mixture front 190 in the chamber 22 there is essentially no resin mixture 20. From the resin mixture front 190 to the exit opening 26, the chamber 22 is essentially filled with resin mixture 20.

The chamber 22 is a tapered portion 28 that extends between the entrance opening 24 and the exit opening 26. The tapered portion 28 causes the chamber 22 to have a taper of less than one degree with the chamber 42 being wider at the entrance opening 24 then the chamber 22 at the exit opening 26 with the taper being essentially linear between the exit opening 26 and the entrance opening 24.

The resin mixture 20 is provided from a resin mixture supply under a pressure of 325-450 psi to the internal channel 91 in the core 90 of the injecting mechanism 18. The internal channel 91 extends essentially horizontally across the core 90. At the end of the internal channel opposite the end in which the resin mixture 20 is introduced into the internal channel 91 there is a plug 192. The plug 192 can be removed to facilitate cleaning of the internal channel 91.

The internal channel 91 in the core 90 aligns with a first injection channel 72 and a second injection channel 78 in the cavity 88, and a third injection channel 82 in the core 90 to provide resin mixture 20 to them. The core 90 and the cavity 88 together define the injecting mechanism 18. The top 18 is part of the core 90, and the first and second side and bottom 81 are part of the cavity. The resin mixture 20 in the first injection channel 72 is disposed in the first side 74 of the injecting mechanism 18 enters the chamber 22 through a first injection port 73 in a first weir channel 92. Resin mixture 20 in the second injection channel 78 disposed in the second side 76 enters the chamber 22 through a second injection port 79 in the second weir channel 94. Resin mixture in the third injection channel 82 enters the chamber 22 through a third injection port 83 in the top weir channel 95. The first weir channel 92, the second rear channel 94 and the bottom weir channel 93, which is connected to the first weir channel 82 and the second weir channel 94, and all of which opposes the top weir channel 95 together define the weir 38. The first weir channel 92 is disposed in the first side 74, the second weir channel 94 is disposed in the second side 76, the bottom weir channel 93 is disposed in the bottom 81 and the top weir channel 95 is disposed in the top 80. The resin mixture 20 is injected into the weir 38 which provides for a greater cross-sectional area in the chamber 22 from the rest of the chamber 22 for the resin mixture to circulate throughout and about the chamber 22 and thus the sandwich 66 in the chamber 22.

The resin mixture 20 from the third injection port 83 disperses throughout the top weir channel 94 along the inside 193 of the sandwich 66 to the first and second weir channels. The resin mixture 20 from the first injection port 73 disperses throughout the first weir channel 92 up to the top weir channel 95 and down to the bottom weir channel 93 so the resin mixture contacts the outside 194 of the sandwich 66 in a C shape. The resin mixture 20 from the second injection port 79 disperses into the second weir channel 94 up to the top weir channel 95 and down to the bottom weir channel 93 so the resin mixture contacts the outside 194 of the sandwich 66 having a c shape. In this way, the sandwich 66 is surrounded with resin mixture 20.

Because the resin mixture 20 is under pressure, the resin mixture 20 distributes and disperses not only in the weir 38, but also in the chamber 22 towards the entrance opening 24 and towards the exit opening 26. The extent to which the resin mixture 20 travels towards the entrance opening 24 in the presence of the sandwich 66 in the chamber 22 is determined by several factors such as pressure of the resin mixture 20, speed of the sandwich 66 moving through the chamber 22, the temperature of the resin mixture 20, the viscosity of the resin mixture 20, the material of the sandwich 66 and the packing density of the sandwich 66. The resin mixture 20 penetrates and wets the sandwich 66 as the sandwich 66 moves through the resin mixture. The middle mat 134, first layer 144 and second layer 146 of the sandwich 66 have already been impregnated with resin mixture 20 in the pre-wet assembly 50. The greater the pressure and longer the time the resin mixture has to impregnate the sandwich 66, the more complete the distribution of the resin mixture throughout the sandwich 66 to provide for the proper structural and surface characteristics.

The taper of the tapered portion 28 facilitates the pressure being maintained at a higher level in the resin mixture 20 between the weir 38 and the entrance opening 24 then would otherwise be the case if there was no taper. By the taper being at less than 1.5°, and preferably .5° and more preferably less than .250°, the pressure change is gradual enough over a distance to have time to cause the resin mixture to take advantage of this pressure and impregnate the sandwich 66. The taper causes the resin mixture to maintain pressure as it moves toward the entrance opening 24 and compensate for the resin mixture pressure to otherwise drop as it is distributed towards the entrance opening 24. The taper also causes the sandwich 66 to compress together and the sandwich 66 moves through the chamber 22 because the chamber 22 gets smaller because of the taper as the sandwich 66 moves to the exact opening 26. Similarly, the taper, by causing the chamber 22 to be smaller nearer the weir 38 also serves to maintain the pressure of the resin mixture 20 that the resin mixture 20 has as the resin mixture 20 enters the weir 38. This is because the smaller the given volume the resin mixture fills, the more pressure will exist. In addition, as mentioned above, other factors such as the movement of the sandwich 66 through the chamber 22 in a direction opposite the direction the resin mixture 20 desires to spread out also serves to maintain the pressure of the resin mixture 20 from dissipating since the moving sandwich 66 acts as resistance to the spread of the resin mixture and thus serves to contain it and the pressure as if it was like a closed system.

The resin mixture front 190 is at a great enough pressure maintained because of the taper that any air being carried forward or trapped in the sandwich 66 is forced back and to the entrance opening 24 or out of the sandwich 66. This effect of removing gas or air from the sandwich 66 is important because voids in the resin mixture are prevented from existing. These voids could weaken the part that is produced from the process. The resin mixture 20 moves toward the entrance opening 24 in a laminar flow distribution filling the spaces between the rovings, mat, veil and sides and top 80 and bottom 81 of the chamber 42.

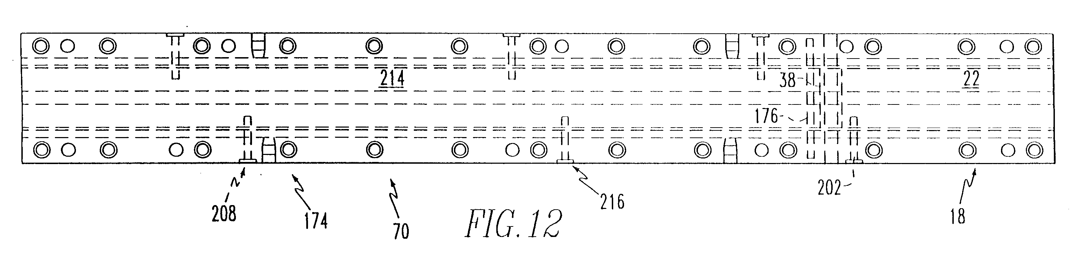

The sandwich 66 with resin mixture 20 exits the chamber 22 through the exit opening 26. The sandwich 66 extends from the exit opening 26 into the pultrusion die 70, as shown in figure 9. The pultrusion die 70 has an entrance opening 212 in communication with the exit opening 26 of the chamber 22 to receive the sandwich 66 with resin mixture 20 passing from the exit opening 26 of the chamber 22. The pultrusion die 70 has a pultrusion die chamber 214 through which the sandwich 66 with resin mixture is pulled and in which the sandwich 66 with resin mixture is cured. In the pultrusion die 70, the resin mixture 20 is cured, as is well known to one skilled in the art. The pressure of the resin mixture 20 is essentially at its maximum level at the weir 38 and is maintained at this level from the weir 38 to the exit opening 26, through to the pultrusion die 70 up until the resin mixture 20 has cured. The pressure essentially is constant in the pultrusion die 70 because the pultrusion die 70 acts as a closed system in regard to the pressure, with the pressure having nowhere to dissipate. The injecting mechanism 18 and the pultrusion die 70 form one continuous piece and define a second housing 174, as shown in figure 12. The core 90 and the cavity 88 extend from the front 84 of the injecting mechanism 18 to the back 210 of the pultrusion die 70. The core 90 and the cavity 88 are bolted together to form the second housing 174. The second housing 174 has a first insulation slot 195 and a second insulation slot 196 disposed in it and above the exit opening 26, as shown in figure 10. The second housing 174 also has a third insulation slot 197 and a fourth insulation slot 198 disposed in it below the exit opening 26. Thermal insulation 172 fills the insulation slots 176 to inhibit the transfer of heat from the pultrusion die to the injecting chamber 22. The width of each insulation slot is 1/4 inches. The resin mixture 20 is desired to be maintained at a temperature of 90°F or less so the resin mixture does not start to cure prematurely and clog the chamber 22 or exit opening 26.

Additionally, there is a first cooling block 199 disposed on the second housing 174 adjacent the weir 38 and exit opening 26, and a second cooling block 200 disposed on the second housing 174 below the weir 38 and the exit opening 26. Each cooling block is connected to a water supply. A first thermo-couple 202 disposed in the chamber 22 near the weir 38 and exit opening 26 provides a signal to a controller 204 identifying the temperature of the injecting mechanism 18. When the resin mixture 20 temperature goes above 90 degrees, the signal from the first thermo-couple causes the controller 204 to activate the water supply and pump water through the cooling blocks to cool the resin mixture 20 in the chamber 22 to a desired temperature.

There are a series of 4 heating/cooling blocks 182 disposed along and about the pultrusion die 70. The heating/cooling blocks maintain the resin mixture 20 in the pultrusion die at a desired temperature to cause the resin mixture to cure with the sandwich 66. A second thermo-couple 206 and a third thermo-couple 208 are disposed in the pultrusion die 70 to provide temperature information to the controller 204 about the temperature in the pultrusion die 70 to operate the heating or cooling units of the heating/cooling blocks.

Connected to the sandwich 66 that has cured resin mixture and been formed into a product is a pultruding mechanism 14. The pultruding mechanism 14 pulls the sandwich 66 out of the pultrusion die 70 and thus all the rovings, mat and veil through the respective elements of the system 10 from the rovings spools 32 of the rovings supply 20. The pultruding mechanism, such as pullers, is positioned far enough away from the end of the second housing 174 opposite the front 84 to allow the composite formed of cured resin and reinforcement to have substantially cooled.

## Resin Mixture Formulation - Typical

|  | Per Batch |
|---|---|
| Resin - Polyester | 77.26 LB |
| Filler - Clay | 18.14 LB |
| Pigment | 2.48 LB |
| Pre-Pack | 2.12 |

Pre-Pack contains following materials:

| Internal lubricant | - 3.0 LB |
|---|---|
| Curing initiator | - 5.2 LB |
| UV additives/inhibitor | - 2.5 LB |

## Raw Materials Information

| Name | Type | Mfg. |
|---|---|---|

A - Resin Mixture Components

| | | |
|---|---|---|
| Polyester resin | E-606-6 | Owens Corning |
| Filler | ASP900 | Engelhard |
| Pre-Pack | SP18-1/2 | Scott Chemical Company |

| | | | |
|---|---|---|---|
| Pigment | -Blue | CM 31820 | Plasticolors |
| | or -Green | CM 52072 | Plasticolors |

B - Reinforcements

| Rovings | 366 | Owens Corning |
|---|---|---|
| | or 2011 | PPG |
| Structural Mat | 8643 | Owens Corning |

C - Others

| Surface Veil | REEMAY 2014 | Sterling |
|---|---|---|

## Materials Distribution

| 1. | Materials (reinforcements and veil) distribution are shown in figure 17. |
|---|---|
| 2. | Resin Mixture Distribution |
| | 60 to 75% of required resin mixture is delivered through pre-wet chamber. Remaining amount of resin mixture is delivered through injection chamber. |

## Resin mixture flow calculations -- for typical section at 5 foot per minute (5 FPM)

1. Resin mixture delivered through pre-wet

| | 0.01385 LB per 1 FT of rail | - mass flow |
|---|---|---|
| or | 0.6912 LB per minute | - mass flow |
| or | 0.0652 gal. per minute | - volumetric flow |

2. Resin mixture delivered through injection chamber

| | 0.05925 LB/FT of rail | - mass flow |
|---|---|---|
| or | 0.29625 LB per minute | - mass flow |
| or | 0.02795 gal. per minute | - volumetric flow |

3. Resin mixture flow through injection port

| | 0.09875 LB/minute |
|---|---|
| or | 0.009316 gal./minute |
| or | 35.3 cubic centimeter (cc) per minute |
| | 2.15 cubic inch/minute |

Volumetric flow

| 3/8" ports | 49.7 cc/minute | or | 3.03 cubic inch/minute |
|---|---|---|---|
| | 0.82 cc/sec. | or | 0.05 cubic inch/sec. |
| 1/2" ports | 27.8 cc/minute | or | 1.7 cubic inch/minute |
| | 0.46 cc/minute | or | 0.028 cubic inch/sec. |

4. Resin mixture volumetric flow in weirs. 1/2" x 1"

| 5.47 cc/min. | or | 0.33 cubic inch/min. |
|---|---|---|
| 0.091 cc./sec. | or | 0.0055 cubic inch/sec. |

Pressure Gauges (Figure 18)

| Speed (FPM) | C | B | A |
|---|---|---|---|
| 2.0 | 25 | 120 | 375 PSI |
| 3.0 | 0 | 75 | 375 PSI |
| 4.0 | 0 | 50 | 375 PSI |
| 5.0 | 0 | 20 | 375 PSI |

For the J channel, as shown in figure 28

| | | |
|---|---|---|
| 1. | Surface veil (bottom) | (5 ½" wide) |
| 2. | Surface veil (top) | (5 ½" wide) |
| 3. | Bottom structural mat | (3 ½" wide) |
| 4. | Middle structural mat | (3 ½" wide) |
| 5. | Top structural mat | (3 ½" wide) |
| 6. | Rovings - 80 ends | |
| 6A. | Bottom rovings layer - 42 ends | |
| 6B. | Top rovings layer - 38 ends | |
| 7. | Resin mixture | |

- Resin mixture formulation - the same as for typical section.
- Raw materials information add to pigment:

| | Type | Mfg. |
|---|---|---|
| Green | CM 52072 | Plasticolors |
| Raspberry | 4855 | Rebus, Inc. |

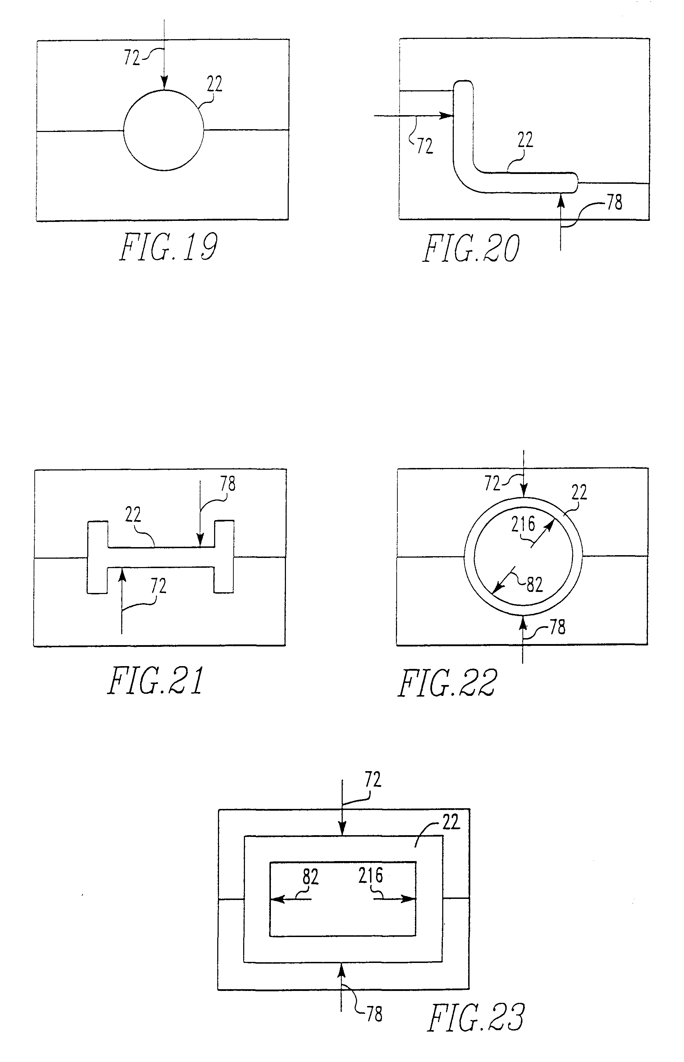

The cross-section of the chamber 22 can be used on a multitude of pultrusion sections. Figures 19-28 depict typical pultrusion sections that are commonly found. It is well known to one skilled in the art how to form the sandwich 66 into the desired cross-section to form the respective pultrusion sections shown in figures 19-28.

In figures 19-28, arrows show where the injection ports contact the chamber 22. The taper described herein of the chamber 22 is applicable for all the embodiments shown in figures 19-28 and the injection ports connect with the weir 38 that is found in the chamber. Additionally, the weir 38 in each of the embodiments shown in figures 19-28, the weir 38 is close enough to the exit opening 26 so the pressure of the resin mixture 20 at the weir 38 is essentially the same as the pressure of the resin mixture 20 at the exit opening 26 and through the pultrusion die 78. One skilled in the art knows how to form these various cross sections in the reinforcement.

Figure 19 shows a cross-section of the chamber 22 for use in the formation of a solid rod. There is a first injection channel 72 connected to the chamber 22 to form the solid rod. Figure 20 shows a cross-section of the chamber 22 for use in the formation of an angle. There is a first injection channel 72 connected to the chamber 22 at the outside vertical side of the chamber 22 and a second injection channel 78 connected to the outside horizontal side of the chamber 22. Figure 21 shows a cross-section of the chamber 22 for use in the formation of an I beam. There is a first injection channel 72 connected to the chamber 22 at the left inside portion of the I beam and a second injection channel 78 connected to the chamber 22 at the right inside portion over the I beam. Figure 22 shows a cross-section of the chamber 22 for use in the formation of a hollow tube. There is a first injection channel 72 and a second injection channel 78 connected to the chamber 22 at the outside 12 o'clock and six o'clock positions of the chamber 22. There is a third injection channel 82 and a fourth injection channel 216 connected to the chamber 22 at the bottom inside 12 o'clock and six o'clock positions of the chamber 22. Figure 23 shows a cross- section of the chamber 22 for use in the formation of hollow rectangular shapes. There is a first injection channel 72 and a second injection channel 78 disposed at the center for the outside top and bottom sides of the chamber 22. There is a third injection channel 82 and a fourth injection channel 216 connected to the chamber 22 at the left center inside and to the right center inside.

In regard to figures 22 and 23, the resin mixture is supplied to the injection ports interior to the chamber 22 through at least one injection channel that extends in a mandrel in the center of the chamber 22. The mandrel extends from the chamber 22 to the outside of the injecting mechanism 18 and piping to the injection channel that extends through the mandrel to the injection ports 82, 216 connects to the mandrel before the sandwich 66 is formed. In this way the continuity of the sandwich is not compromised by the resin mixture supply having to pass through the sandwich. Thus, the piping carrying the resin mixture 20 connects to the mandrel before the sandwich is formed, and extends through rovings before they have come together to form the sandwich 66.

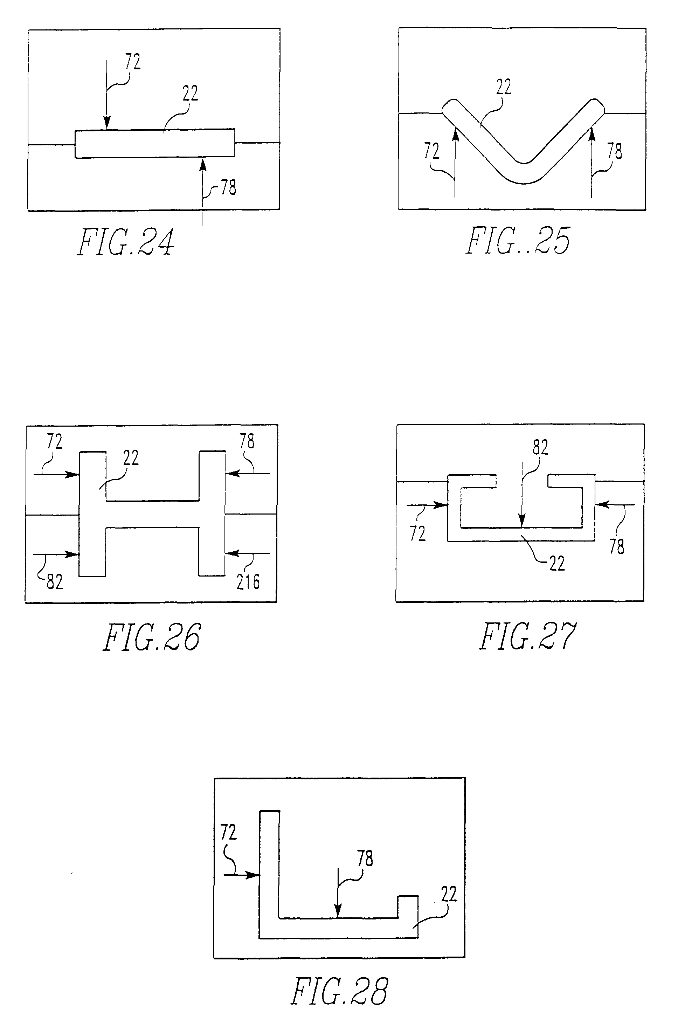

Figure 24 shows a cross-section of the chamber 22 for use in the formation of a solid plate. There is a first injection channel 72 connected to the chamber 22 at its left top side and a second injection channel 78 connected to the chamber 22 at its right bottom side. Figure 24 shows a cross-section of the chamber 22 for use in the formation of an angle different from the angle of figure 20. There is a first injection channel 72 connected to the chamber 22 at the left bottom side and a second injection channel 78 connected to the right bottom side. Figure 26 shows a cross-section of the chamber 22 for use in the formation of an H beam. There is a first injection channel 72 and a second injection channel 78 connected to the chamber 22 at the top left exterior side and the top right exterior side, respectively. There is a third injection channel 82 and a fourth injection channel 216 connected to the chamber at the bottom left exterior side and the bottom right exterior side, respectively. Figure 27 shows a cross-section of the chamber 22 for use in the formation of a C channel. This may be a simple C or else a C with turns or lips, as shown. There is a first injection channel 72 and a second injection channel 78 connected to the chamber at the left exterior side and the right exterior side, respectively. There is a third injection channel 82 connected to the chamber 22 at the center interior bottom side. In all the embodiments depicted in figures 19-28, resin mixture 20 is supplied to the chamber 22 under pressure so the resin pressure spreads out and fills the weir 38 in the chamber 22 as well as spreading toward the entrance opening to define a resin mixture front 190 and extending back to the exit opening 26 to fill the chamber 22 from the resin mixture front 190 back to and through the pultrusion die 70. Figure 28 shows a cross-section of the chamber 22 for use in the formation of a J channel. There is a first injection channel 72 connected to the chamber 22 at the left exterior side and a second injection channel 78 connected to the chamber 22 at the center interior top.

There are several considerations which are taken into account to determine the location of the injection ports for a given pultruded section. For instance, the complexity of the part (its shape) is determinative of the location of the injection ports in the chamber 22. The more complex the part, typically the more injection ports are needed to ensure full and complete wetting of the sandwich 66 about its surface and adequate resin mixture 20 supply for proper impregnation of the sandwich 66. Additionally, the thickness of the part being produced must be considered when determining the location of injection ports in the chamber 22. The thicker the part, the more injection ports are required. Typically, the thicker the part, the more surface area and greater the distance about the part which must be supplied with resin mixture to properly impregnate the part. Since there is more surface area on thicker parts, more resin injection ports are typically needed to adequately supply all areas of the part. Moreover, a injection port cannot oppose another injection port at a given section of a part. Injection ports which oppose each other typically cause shifting to occur of the rovings, mat or veil which is undesirable. It is extremely important to maintain the position of the rovings, mat or veil of the sandwich 66 in place to ensure a structurally strong part. Furthermore, the design of the die or housing itself must be taken into account. If the die is formed of a core 90 and a cavity 88, the parting lines defined by their joinder must be avoided by the ports. The ports must go around the parting lines to provide for a more even and adequate distribution of resin mixture 20 into the weir 38.

The key to good color and surface appearance of fiberglass rails produced by resin injection, their close match to appearance of fiberglass rails produced by standard process, and their mechanical/physical performance is the ratio of permeability of resin mixture through the reinforcement pack. (This is commonly called wet-out).

Listed below are items affecting wet-out ratio.

1. Viscosity of resin mixture
2. Particle size of filler/loading of filler
3. Injection pressure
4. Loading of pigment
5. Wet-out characteristics of rovings.
6. Pultrusion speed.

Only the proper balance of these items will result in product having all characteristics mentioned above.

1. Viscosity of Resin Mixture.
Desirable product could be achieved by means of decreasing the viscosity of standard resin mixture from 12,000-15,000 cps to 3,000-5,000 cps. The following methods are preferred to obtain it:

1. Addition of styrene monomer.
2. Heated resin mixture (110-120°F).

3. Reducing filler loading (as low as 75% of std. (18-20% of resin mixture)).
4. Reducing pigment loading (as low as 75% of std. (2-4% of resin mixture)).

Favorable results were also achieved with standard resin mixture having viscosity range from 5,000 to 8,000 cps. Styrene monomer addition or heated resin mixture were used interchangeably to obtain this viscosity range.

2. Filler Particle Size.
Preferably, filler with particle size of 1.5μ or less is included in resin mixture. Preferred filler has ability to penetrate the glass fibers which have an approximate diameter of 20μ (microns).
3. Injection Pressure.
Preferred injection pressure to achieve desirable product ranges from 350 to 450 psi. This could be achieved using air driven pump system.
4. Wet-Out Characteristics of Rovings.
Rovings strand with properly designed sizing system which would allow individual glass filaments to spread apart easily, therefore providing increased accessible surface area for resin mixture impregnation is preferred.
5. Pigment Loading (see pt. 1).
6. Pultrusion Speed.
The reinforcement is typically pultruded at 2-5 ft./min. through the system 10. The proper balance of these items will result in product having all characteristics mentioned above.

Generally, a resin mixture having a viscosity of 3,000-15,000 cps, a temperature of 90°-120°F with a filler having an average particle size of .5-1.5μ at a pressure of 325-450 psi is used for injection into the chamber.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A system for producing a pultruded part having a cross-sectional shape with a non-linear portion comprising:

    a mechanism for pultruding reinforcement;

    a mechanism for injecting resin mixture into reinforcement, said injecting mechanism comprising a chamber through which the reinforcement is pulled by the pultruding mechanism, said chamber having an entrance opening in communication with the chamber through which reinforcement enters the chamber and an exit opening in communication with the chamber through which reinforcement exits the chamber, the entrance opening having a shape with a non-linear portion that conforms with the reinforcement cross section, said chamber having a tapered portion with a taper less than or equal to 1.5° which accents impregnation of reinforcement with resin mixture and increases resin mixture pressure as the tapered portion narrows, said tapered portion wider nearer the entrance opening than the exit opening, said injecting mechanism comprising a resin mixture distribution network in communication with the chamber through which resin mixture is introduced into the chamber, said injecting mechanism disposed adjacent to and in engagement with the pultruding mechanism so the pultruding mechanism can pull the reinforcement through the chamber;

    a mechanism for providing reinforcement formed into a desired cross section having a shape with a non-linear portion to the chamber through said entrance opening, said providing mechanism disposed adjacent to and in engagement with the injecting mechanism so reinforcement from the providing mechanism can enter the entrance opening of the injecting mechanism, said providing mechanism comprising a pre-wet assembly for impregnating reinforcement with resin mixture before it is provided to the injection mechanism; and

    a mechanism for making the resin mixture that has been combined with reinforcement in the injecting mechanism into a part, said making mechanism disposed adjacent to and in engagement with the injecting mechanism to receive reinforcement with resin mixture from the injecting mechanism and disposed adjacent to and in engagement with the pultruding mechanism so the reinforcement can be pulled through the making mechanism by the pultruding mechanism.

2. A system as described in Claim 1 wherein the injecting mechanism is comprised of a mechanism for supplying resin mixture to the chamber, said supplying mechanism connected to the resin mixture distribution network.

3. A system as described in Claim 2 wherein the chamber comprises a weir into which the resin mixture is injected into the chamber through the resin mixture distribution network, said resin mixture distribution network connected to the weir.

4. A system as described in Claim 3 wherein the providing mechanism comprises a rovings supply that provides rovings to the injecting mechanism, said rovings supply disposed adjacent the injecting mechanism.

5. A system as described in Claim 4 wherein the providing mechanism comprises a first carding plate disposed between the rovings supply and the pre-wet assembly, said rovings passing throuqh said first carding plate, said first carding grid aligning the rovings into a desired spaced relationship to achieve a uniform distribution pattern of rovings in the ladder part when it is made in the making mechanism, said first carding plate having holes through which the rovings pass, said holes forming a pattern where the holes do not overlap.

6. A system as described in Claim 5 wherein the providing mechanism comprises a mat supply which provides mat for the ladder part, said mat supply disposed adjacent the rovings supply and the first carding plate, and supplying mat to the pultruding mechanism through the first carding plate, injecting mechanism and making mechanism, said pultruding mechanism pulling the mat from the mat supply through the first carding plate which aligns the mat into a desired position with rovings and then through the injecting mechanism where resin mixture is combined with the mat and the rovings and then through the making mechanism where the resin mixture with rovings and mat is made into the ladder part.

7. A system as described in Claim 6 wherein the pre-wet assembly impregnating center rovinqs of the uniform distribution pattern and center mat with resin mixture before they reach the injecting mechanism.

8. A system as described in Claim 7 wherein the providing mechanism comprises a forming/tension mechanism disposed adjacent the pre-wet assembly through which rovings are pulled by the pultruding mechanism, said forming/tension mechanism tensioning rovings so essentially no shifting of rovings occurs and they are maintained in a desired distribution as they are pulled to the injecting mechanism.

9. A system as described in Claim 8 wherein the providing mechanism comprises a forming station which forms rovings and mat intd a desired cross-sectional shape, said forming station disposed adjacent the injecting mechanism and the pre-wet assembly and forming/tension mechanism to receive rovings and mat from the pre-wet assembly and the forming/tension mechanism and form them into the desired cross-section, and then provide rovings and mat in the desired cross-section to the entrance opening of the injecting mechanism.

10. A system as described in Claim 9 wherein the providing mechanism comprises a veil supply disposed adjacent to the forming station to provide veil to the forming station so the forming station forms rovings, mat and veil into the desired cross-section, said veil supply is in engagement with the pultruding mechanism so veil is pulled from the veil supply to the forming station and to the injecting mechanism and then with rovings and mat to the making mechanism.

11. A system as described in Claim 10 wherein the providing mechanism comprises a carding grid disposed adjacent the rovings supply and the mat supply, and a second carding plate disposed adjacent to the carding grid and the first carding plate, rovings from the rovings supply and mat from the mat supply pulled through the carding grid which distributes rovings and mat in a desired orientation, and the second carding plate, which distributes rovings and mat in a desired orientation by the pultruding mechanism.

12. A system as described in Claim 11 wherein the providing mechanism comprises a squeezing mechanism which form rovings from the forming/tension mechanism and rovings and mat from the pre-wet assembly, and mat from the mat supply into a sandwich, said squeezing mechanism disposed adjacent to the pre-wet assembly and to the forming/tension mechanism to receive rovings and mat from the pre-wet assembly and the forming/tension mechanism, and disposed to receive mat from the mat supply, and a horizontal guide disposed adjacent to the squeezing mechanism to receive rovings and mat that have been formed into a sandwich by the squeezing mechanism and disposed adjacent to the forming station so the rovings and mat formed into a sandwich passes to the forming station as they are pulled by the pultruding machine.

**13.** A system as described in Claim 12 wherein the making mechanism comprises a pultrusion die which cures resin mixture with the rovings, mat and veil and which is disposed adjacent the injecting mechanism to receive rovings, mat and veil therefrom.

**14.** A system as described in Claim 13 wherein the forming/tension mechanism comprises a top forming/tension portion disposed above the pre-wet assembly to tension and reduce shifting of the rovings above and extending past the pre-wet assembly, and a bottom forming/tension portion disposed below the pre-wet assembly to tension and reduce shifting of the rovings below and extending past the pre-wet assembly.

**15.** A system as described in Claim 14 wherein the top forming/tension portion comprises a first rovings tension bar, and a second rovings tension bar in spaced relationship with the first rovings tension bar such that rovings which pass under and in contact with the first rovings tension bar and then extend over and in contact with the second rovings tension bar are caused to be made taut and essentially prevented from shifting and flatten into a smooth even top layer, said first and second rovings tension bar attached to the pre-wet assembly.

**16.** A system as described in Claim 15 wherein the bottom forming/tension portion comprises a third rovings tension bar, and a fourth rovings tension bar in spaced relationship with the third rovings tension bar such that rovings which pass over and in contact with the third rovings tension bar and then extend under and in contact with the fourth rovings tension bar are caused to be made taut and essentially prevented from shifting and flatten into a smooth even bottom layer, said third and fourth rovings tension bar attached to the pre-wet assembly.

**17.** A system as described in Claim 16 including a cooling mechanism in thermal contact with the injecting mechanism to maintain resin mixture injected into the chamber at below a desired temperature.

**18.** A system as described in Claim 17 including thermal insulation disposed between the injecting mechanism and the pultrusion die.

**19.** A system as described in Claim 18 wherein the injecting mechanism and the pultrusion die are one continuous piece forming a second housing with rovings exiting the exit opening and passing directly into the pultrusion die.

**20.** A system as described in Claim 19 wherein the second housing has insulation slots disposed between the chamber of the injecting mechanism and the pultrusion die, said insulation disposed in said insulation slots.

**21.** A system as described in Claim 20 wherein the cooling mechanism includes cooling blocks through which coolant flows when the resin mixture reaches a predetermined temperature to cool the resin mixture below a desired temperature, said cooling blocks connected to the second housing adjacent the chamber and insulation slots.

**22.** A system as described in Claim 21 including heating and cooling blocks connected to the second housing and adjacent the pultrusion die to control the temperature of the resin mixture in the pultrusion die.

**23.** An injecting mechanism for injecting resin mixture into reinforcement comprising:

a chamber having a tapered portion with a taper of less than 1.5° that accents impregnation of reinforcement with resin mixture and increases resin mixture pressure as the tapered portion narrows, said chamber having a weir;
a resin mixture distribution network in communication with the weir through which resin mixture is injected into the weir, said network comprising first, second and third injection channels that are disposed about the chamber and connected to one another, said first and second channels communicate with said weir, and said third channel communicates with said first and second channels and with the resin supply mechanism;
an entrance opening in communication with the chamber through which reinforcement enters the chamber, the entrance opening having a shape with a non-linear portion that conforms with the reinforcement cross section; and
an exit opening through which reinforcement exits the chamber, said tapered portion being wider nearer the entrance opening than the exit opening.

**24.** An injecting mechanism as described in claim 23 wherein the chamber includes a weir, said resin mixture distribution network connected to the weir to inject resin mixture into the chamber at the weir.

25. An injecting mechanism as described in claim 24 wherein the resin mixture distribution network includes a first channel connected to the weir through which resin mixture is injected to the weir.

26. An injecting mechanism as described in Claim 25 wherein the tapered portion extends across the chamber from the entrance opening to the exit opening with the weir disposed in the chamber closer to the exit opening than the entrance opening.

27. An injecting mechanism as described in Claim 26 including a first side and a second side opposing the first side, said resin mixture distribution network comprising a second injection channel through which resin mixture is injected into the weir, said first injection channel having a first injection port in the first side through which resin mixture from the first injection channel enters the chamber and said second injection channel having a second injection port in the second side through which resin mixture from the second injection channel enters the chamber.

28. An injecting mechanism as described in Claim 27 including a top connected to the first side and the second side, and a bottom connected to the first side and the second side, said bottom opposing said top, said resin mixture distribution network comprising a third injection channel having a third injection port in the top through which resin mixture is injected from the third channel into the weir.

29. An injecting mechanism as described in Claim 28 including a front and a back opposing the front, said front and back connected to the first side, second side, top and bottom, said entrance opening in the front and said exit opening in the back, said front, back, first side, second side, top and bottom defining the chamber.

30. An injecting mechanism as described in Claim 29 wherein the bottom, the first side, the second side, a lower portion of the front and lower portion of the back are one continuous piece and form a cavity, and the top and an upper portion of the back are one continuous piece and form a core, said core and cavity mate together with the upper and lower portion of the front and the back aligning together to define the entrance opening and exit opening, respectively.

31. An injecting mechanism as described in Claim 30 wherein the entrance opening and the exit opening and the chamber have a cross-sectional shape which corresponds to the cross-sectional shape of the reinforcement as it passes through the entrance opening, chamber and exit opening.

32. An injecting mechanism as described in Claim 31 wherein the resin mixture distribution network comprises an internal channel disposed in the top which connects with the first, second and third injection channel to provide resin mixture to them.

33. An injecting mechanism as described in Claim 32 wherein the first side has a first weir channel, the second side has a second weir channel, the bottom has a bottom weir channel and the top has a top weir channel; said top weir channel opposing said first, second and third weir channels, said first weir channel aligning with said bottom weir channel; said bottom weir channel aligning with said second weir channel; said first, second, bottom and top weir channels defining the weir.

34. An injecting mechanism as described in Claim 33 wherein the weir length is about 1 inch, the weir depth is about 3/8 inch to ½ inch and each injection port has a diameter of 3/8 inch to ½ inch.

35. An injecting mechanism as described in Claim 34 wherein the chamber is about 10 inches in length, the taper is about .0015 per inch/per side and the entrance opening is about 1 inch in length.

36. An injecting mechanism as described in Claim 35 including a first o-ring seal disposed between the internal channel and the first injection channel and a second o-ring seal disposed between the internal channel and the second injection channel.

37. An injecting mechanism as described in Claim 36 wherein the first and second sides are essentially parallel and extend perpendicularly from the top and the bottom.

38. An injecting mechanism as described in Claim 37 wherein the weir is disposed at the tapered portion where pressure of the resin mixture injected into the chamber is greatest.

**39.** An injecting mechanism as described in Claim 38 wherein the tapered portion causes pressure of the resin mixture in the chamber to go from atmospheric pressure to 500 psi.

**40.** An injecting mechanism as described in Claim 23 wherein the entrance opening has a lipped C shape, the chamber has a first side, a second side and a top, and the resin mixture distribution network has a first injection channel, second injection channel and third injection channel connected to the first, second and third side, respectively.

**41.** An injecting mechanism as described in Claim 23 wherein the entrance opening has a J shape, the chamber has a first side and a top, and the resin mixture distribution network has a first injection channel and a second injection channel connected to the first side and the top, respectively.

**42.** A pre-wet assembly comprising:

a pre-wet housing having a pre-wet chamber into which resin mixture is introduced, a slot through which reinforcement passes, said slot connected to the pre-wet chamber so resin mixture in the pre-wet chamber can contact reinforcement in the slot, said slot having a slot entrance and a slot exit through which the reinforcement enters and exits the slot, respectively, and a pre-wet injection channel connected to the pre-wet chamber through which resin mixture is introduced into the pre-wet chamber; and

a pre-wet resin mixture delivery system that provides resin mixture to the pre-wet injection channel at a desired pressure corresponding to the slot dimension.

**43.** A pre-wet assembly as described in claim 42 wherein the pre-wet resin mixture delivery system includes piping which has a constant diameter but a variable length corresponding to speed at which reinforcement moves through the slot, the slot dimension, the resin mixture's viscosity and pressure drop desired of the resin mixture pressure from entrance into the piping to introduction into the pre-wet chamber.

**44.** A pre-wet assembly as described in Claim 43 wherein the piping causes a pressure drop in the resin mixture from 350-425 psi to 10-20 psi in the chamber.

**45.** A pre-wet assembly as described in Claim 44 wherein the slot has a width essentially the width of the reinforcement passing through it, and a height about 0.070 inches.

**46.** A carding plate for controlling placement of reinforcement for resin mixture injection comprising:
a plate having a series of holes which do not overlap and carding slots through which rovings and mat, respectively, extend.

**47.** A carding plate as described in Claim 46 wherein each hole is spaced evenly from a subsequent hole.

**48.** A carding plate as described in Claim 47 wherein each hole is spaced a distance A from another hole where

$$A= \frac{\text{(distance between outermost rovings d)}}{\text{(\# of holes -1)}}$$

**49.** A carding plate as described in Claim 48 wherein the holes form a first set and a second set of a series of rows with a first hole of each row offset a distance A relative to an immediate lower row, and including a middle slot disposed between the first and second sets of series of rows, a top slot with the first set of series of rows disposed between the top slot and the middle slot, and a bottom slot with the second set of series of rows disposed between the middle slot and the bottom slot.

**50.** A housing through which reinforcement for pultruded products pass comprising:

a mechanism for injecting resin mixture into reinforcement, said injecting mechanism comprising a chamber through which the reinforcement passes, said chamber having a tapered portion with a taper of less than 1.5° that accents impregnation of reinforcement with resin mixture and increases resin mixture pressure as the tapered portion narrows, said chamber having an entrance opening in communication with the chamber through which reinforcement enters the chamber and an exit opening in communication with the chamber through which reinforcement exits the chamber, said injecting mechanism comprising a resin mixture distribution network in communication with the chamber through which resin mixture is introduced into the chamber; and

a pultrusion die which cures resin mixture with the reinforcement from the injecting mechanism, said pultrusion die integrally connected and forming one continuous piece with the injecting mechanism to receive reinforcement with resin mixture from the injecting mechanism.

51. A housing as described in Claim 50 wherein the pultrusion die has a pultrusion chamber through which the reinforcement with resin mixture passes and in which the resin mixture with the reinforcement is cured, said pultrusion die having an entrance opening in communication with the exit opening of the chamber to receive the reinforcement with resin mixture passing from the exit opening; and including thermal insulation disposed between the injecting mechanism and the pultrusion die.

52. A system for producing a pultruded part having structural integrity comprising:

a mechanism for pultruding reinforcement;

a mechanism for injecting resin mixture into reinforcement, said injecting mechanism comprising a chamber through which the reinforcement is pulled by the pultruding mechanism, said chamber having an entrance opening in communication with the chamber through which reinforcement enters the chamber and an exit opening in communication with the chamber through which reinforcement exists the chamber, the entrance opening having a shape with a non-linear portion that conforms with the reinforcement cross-section, said chamber having a tapered portion with a taper less than or equal to 1.5° which accents impregnation of reinforcement with resin mixture and increases resin mixture pressure as the tapered portion narrows, said tapered portion wider nearer the entrance opening than the exit opening, said injecting mechanism comprising a resin mixture distribution network in communication with the chamber through which resin mixture is introduced into the chamber said chamber having a weir, said injecting mechanism disposed adjacent to and in engagement with the pultruding mechanism so the pultruding mechanism can pull the reinforcement through the chamber, said network comprising first, second and third injection channels that are disposed about the chamber and connected to one another, said first and second channels communicate with said weir, and said third channel communicates with said first and second channels and with the resin supply mechanism;

a mechanism for providing reinforcement formed into a desired cross section to the chamber through said entrance opening, said providing mechanism disposed adjacent to and in engagement with the injecting mechanism so reinforcement from the providing mechanism can enter the entrance opening of the injecting mechanism; and

a mechanism for making the resin mixture that has been combined with reinforcement in the injecting mechanism into a part having structural integrity, said making mechanism disposed adjacent to and in engagement with the injecting mechanism to receive reinforcement with resin mixture from the injecting mechanism and disposed adjacent to and in engagement with the pultruding mechanism so the reinforcement can be pulled through the making mechanism by the pultruding mechanism.

53. A system as described in claim 52 wherein the making mechanism makes the resin mixture that has been combined with reinforcement in the injecting mechanism into a part having structural integrity and electrical insulation quality.

54. A system as described in Claim 53 wherein the making mechanism makes the resin mixture that has been combined with reinforcement in the injecting mechanism into a part having structural integrity and electrical insulation quality and weathering quality.

55. An injecting mechanism for injecting resin mixture into reinforcement comprising:

a top;

a first side connected to the top;

a bottom connected to the first side;

a front connected to the first side, the top and the bottom;

a back connected to the first side, the top and the bottom;

a chamber having a tapered portion with a taper of less than 1.5° that accents impregnation of reinforcement with resin mixture and increases resin mixture pressure as the tapered portion narrows; said chamber defined by the top, first side, bottom, front and back;

a resin mixture distribution network in communication with the chamber through which resin mixture is injected into the chamber, said resin mixture distribution network having a first channel through which resin mixture is injected into the chamber at the first side and a second injection channel through which resin mixture is injected into the chamber at the top;

an entrance opening in communication with the chamber through which reinforcement enters the chamber, said entrance opening disposed in said front; and

an exit opening through which reinforcement exits the chamber, said tapered portion being wider near the entrance opening than the exit opening, said exit opening disposed in said back.

**56.** A method for producing a part comprising the steps of:

forming reinforcement into a desired cross section having a shape with a non-linear portion;

impregnating reinforcement with resin mixture in a pre-wet assembly; pultruding the reinforcement having the desired cross section into a chamber or an injecting resin mixture mecnanism through an entrance opening of the injecting resin mixture mechanism having a shape with a non-linear portion that conforms with the desired cross section of the reinforcement, said chamber having a tapered portion with a taper less than or equal to 1.5° which accents impregnation of reinforcement with resin mixture and increases resin mixture pressure as the tapered portion narrows, said tapered portion wider nearer the entrance opening than the exit opening of the injecting resin mixture mechanism;

injecting resin mixture through a first injection channel of the resin mixture injecting mechanism into the chamber to impregnate the reinforcement in the chamber; and

making the resin mixture that has been combined with reinforcement into a part.

**57.** A method for producing a part comprising the steps of:

forming reinforcement into a desired cross section;
pultruding the reinforcement having the desired cross section into a chamber of an injecting resin mixture mechanism through an entrance opening of the resin mixture injecting mechanism, said chamber having a tapered portion with a taper less than or equal to 1.5° which accents impregnation of reinforcement with resin mixture and increases resin mixture pressure as the tapered portion narrows, said tapered portion wider nearer the entrance opening than the exit opening of the injecting resin mixture mechanism;
injecting resin mixture through a first injection channel and a second injection channel of the resin mixture injecting mechanism into the chamber at a first side and a top, respectively, of the chamber to impregnate the reinforcement in the chamber, said first side in contact with the top; and
making the resin mixture that has been combined with reinforcement into a part having structural integrity.

**58.** A method for introducing resin mixture to reinforcement comprising the steps of:

pultruding reinforcement into a chamber of an injecting resin mixture mechanism through an entrance opening of the injecting resin mixture mechanism, said chamber having a tapered portion with a taper less than or equal to 1.5° which accents impregnation of reinforcement with resin mixture and increases resin mixture pressure as the tapered portion narrows, said tapered portion wider nearer the entrance opening than the exit opening of the injecting resin mixture mechanism; and
injecting resin mixture into the chamber as the reinforcement is pultruded through the chamber through a first injecting channel disposed in a first side of the resin mixture injecting mechanism and a second injecting channel disposed in a second side of the resin mixture injecting mechanism, said first side in contact with said second side, said first and second side contacting the chamber.

59. A method for producing a ladder part comprising the steps of:

forming reinforcement into a desired cross section having a shape with a non-linear portion;

pultruding the reinforcement having the desired cross section into a chamber of a resin mixture injecting mechanism through an entrance opening of the resin mixture injecting mechanism, said chamber having a tapered portion with a taper less than or equal to 1.5° which accents impregnation of reinforcement with resin mixture and increases resin mixture pressure as the tapered portion narrows, said tapered portion wider nearer the entrance opening than the exit opening of the injecting resin mixture mechanism;

injecting resin mixture through a first injection channel of the resin mixture injecting mechanism into the chamber to impregnate the reinforcement in the chamber; and

making the resin mixture that has been combined with reinforcement into a ladder part having structural integrity.

60. A method for introducing resin mixture to reinforcement comprising the steps of:

forming a resin mixture having a viscosity of 3,000-15,000 cps with filler having an average particle size of .5μ-1.5μ;

pressurizing the resin mixture to 325 psi-450 psi; and

injecting the pressurized resin mixture at a temperature of 90°F-120°F into a chamber through which reinforcement is being pultruded.

FIG.1a

FIG.1b

EP 0 747 204 A2

*FIG.2*

EP 0 747 204 A2

FIG.3

FIG.4

FIG.5

FIG.8

FIG.6

EP 0 747 204 A2

FIG.7

CONTROLLER

COOLING BLOCK

HEATING / COOLING BLOCK

HEATING / COOLING BLOCK

COOLING BLOCK

HEATING / COOLING BLOCK

HEATING / COOLING BLOCK

WATER IN

WATER OUT

FIG.9

FIG.10

FIG.11

FIG. 12

FIG.13a

FIG.13b

EP 0 747 204 A2

*88*

**FIG.13e**

*88*

*72*

*73*

*216*

*218*

*79*

**FIG.13d**

*18*

**FIG.13c**

FIG.15

FIG.16

FIG.14a

FIG.14b

FIG.14c

FIG.14d

FIG.14e

FLOW →

C        B        A

4.5"     7"       10"   12"

*FIG.18*

184

140

16

134

16

141

186

20

*FIG.17*

FIG.19

FIG.20

FIG.21

FIG.22

FIG.23

FIG.24

FIG..25

FIG.26

FIG.27

FIG.28